# EUROPEAN PATENT APPLICATION

(11) **EP 2 849 500 A1**
(43) Date of publication of application: **18.03.2015**
(21) Application number: 12876095.6
(22) Date of filing: 07.05.2012
(51) Int. Cl.: H04W 48/20, H04W 36/00, H04W 88/06

(54) **COMMUNICATION APPARATUS, COMMUNICATION CONTROL PROGRAM AND COMMUNICATION CONTROL METHOD**

(71) Applicant: Fujitsu Limited, Kawasaki-shi, Kanagawa 211-8588 (JP)
(72) Inventor: HARA, Yasushi, Kawasaki-shi Kanagawa 211-8588 (JP); TOYOKURA, Akemi, Kawasaki-shi Kanagawa 211-8588 (JP); MIURA, Yuichi, Kawasaki-shi Kanagawa 211-8588 (JP); HARA, Masao, Kawasaki-shi Kanagawa 211-8588 (JP)
(74) Representative: Lewin, David Nicholas
(86) International application number: PCT/JP2012/061689
(87) International publication number: WO 2013/168219

(57) **Abstract**

A communication apparatus (101) detects that a state of a screen (110) transitions from a non-display state to a display state. When detecting that the state of the screen (110) transitions from the non-display state to the display state, the communication apparatus (101) determines, based on connection history information, whether connection a history is present for an access point (103) in a cell of a base station (102) and in which the communication apparatus is located. Upon determining that connection history for the access point (103) is present, the communication apparatus (101) starts a detection operation for the access point (103). On the other hand, upon determining that the connection history for the access point (103) is absent, the communication apparatus (101) does not start the detection operation for the access point (103).

## Description

### TECHNICAL FIELD

The present invention relates to a communication apparatus, a communication control program, and a communication control method.

### BACKGROUND ART

A conventional communication apparatus has a communication function for connecting to a cellular telephone network and a communication function for connecting to a wireless local area network (LAN). The communication apparatus can connect to a network such as Internet by way of, for example, a base station of the cellular phone network or a base station of the wireless LAN, located at each site.

Related prior art includes, for example, a technique for detecting the position of a terminal based on the electric field strength of a signal received from the cellular network base station and detecting the position of a connection point to the wireless LAN based on the base station cell ID and the electric field strength of the received signal.

Patent Document 1: Japanese Laid-Open Patent Publication No. 2009-44659

### DISCLOSURE OF INVENTION

### PROBLEM TO BE SOLVED BY THE INVENTION

The conventional technology, however, gives rise to a problem of increased power consumption in the communication apparatus due to detection operations performed by the communication apparatus to detect a base station of the wireless LAN, etc. For example, in the case of starting the detection operations for detecting the wireless LAN base station when hand-over is performed, frequent hand-over brings about increases in the power consumption of the communication apparatus to detect the base station.

According to one aspect, an object of the present invention is to provide a communication apparatus, a communication control program, and a communication control method, capable of suppressing the power consumption.

### MEANS FOR SOLVING PROBLEM

According to one aspect of the present invention, a communication apparatus, a communication control program and a communication control method are proposed that detect transition of a screen, from a non-display state to a display state; determine whether a connection history is present for a second base station in a communication area in which the communication apparatus is located, upon detecting transition from the non-display state to the display state and based on information specifying among communication areas of a first base station, a communication area in which a connection operation has been performed with respect to the second base station to connect to a network via the second base station, which is detected by a detection operation different from a detection operation that detects the first base station; and control a communicating unit, which communicates with the second base station, to start the detection operation for the second base station, upon determining that connection history is present.

### EFFECT OF THE INVENTION

According to embodiments of the present invention, power consumption can be suppressed.

### BRIEF DESCRIPTION OF DRAWINGS

FIG. 1 is an explanatory view of an example of a communication control method according to a first embodiment;
FIG. 2 is an explanatory view of a system configuration example of a communication system 200;
FIG. 3 is a block diagram of an example of a hardware configuration of a communication apparatus 101;
FIG. 4 is an explanatory view (1) of an example of the contents of a connection table 400;
FIG. 5 is a block diagram of an example of a functional configuration of the communication apparatus 101 according to the first embodiment;
FIG. 6 is an explanatory view (1) of an operation example of the communication apparatus 101 according to the first embodiment;
FIG. 7 is an explanatory view (2) of an operation example of the communication apparatus 101 according to the first embodiment;
FIG. 8 is an explanatory view (3) of an operation example of the communication apparatus 101 according to the first embodiment;
FIG. 9 is an explanatory view (4) of an operation example of the communication apparatus 101 according to the first embodiment;
FIG. 10 is an explanatory view (5) of an operation example of the communication apparatus 101 according to the first embodiment;
FIG. 11 is a flowchart of an example of a determination process procedure of the communication apparatus 101 according to the first embodiment;
FIG. 12 is a flowchart of an example of a communication control process procedure of the communication apparatus 101 according to the first embodiment;
FIG. 13 is a flowchart of an example of an update process procedure of the communication apparatus 101 according to the first embodiment;
FIG. 14 is a block diagram of an example of a functional configuration of the communication apparatus 101 according to a second embodiment;
FIG. 15 is an explanatory view (1) of an operation example of the communication apparatus 101 according to the second embodiment;
FIG. 16 is an explanatory view (2) of an operation example of the communication apparatus 101 according to the second embodiment;
FIG. 17 is an explanatory view (3) of an operation example of the communication apparatus 101 according to the second embodiment;
FIG. 18 is an explanatory view (4) of an operation example of the communication apparatus 101 according to the second embodiment;
FIG. 19 is an explanatory view (5) of an operation example of the communication apparatus 101 according to the second embodiment;
FIG. 20 is an explanatory view (6) of an operation example of the communication apparatus 101 according to the second embodiment;
FIG. 21 is an explanatory view (7) of an operation example of the communication apparatus 101 according to the second embodiment;
FIG. 22 is a flowchart of an example of the determination process procedure of the communication apparatus 101 according to the second embodiment;
FIG. 23 is a flowchart of an example of a setting process procedure of the communication apparatus 101 according to the second embodiment;
FIGs. 24 and 25 are flowcharts of an example of the update process procedure of the communication apparatus 101 according to the second embodiment;
FIG. 26 is an explanatory view (2) of an example of the contents of the connection table 400;
FIG. 27 is a flowchart of an example of the update process procedure of the communication apparatus 101 according to a first updating method when connection to an access point APj is completed;
FIG. 28 is a flowchart of an example of a specific process procedure of the first update process;
FIGs. 29 and 30 are flowcharts of an example of the update process procedure of the communication apparatus 101 according to the first updating method when hand-over is detected;
FIG. 31 is an explanatory view (3) of an example of the contents of the connection table 400;
FIG. 32 is an explanatory view (4) of an example of the contents of the connection information 400;
FIG. 33 is a flowchart of an example of the update process procedure of the communication apparatus 101 according to a second updating method when connection to the access point APj is completed;
FIG. 34 is a flowchart of an example of the specific process procedure of the second update process; and
FIGs. 35 and 36 are flowcharts of an example of the update process procedure of the communication apparatus 101 according to the second updating method when hand-over is detected.

### BEST MODE(S) FOR CARRYING OUT THE INVENTION

Embodiments of a communication apparatus, a communication control program, and a communication control method according to the present invention will be described with reference to the accompanying drawings.

### (First Embodiment)

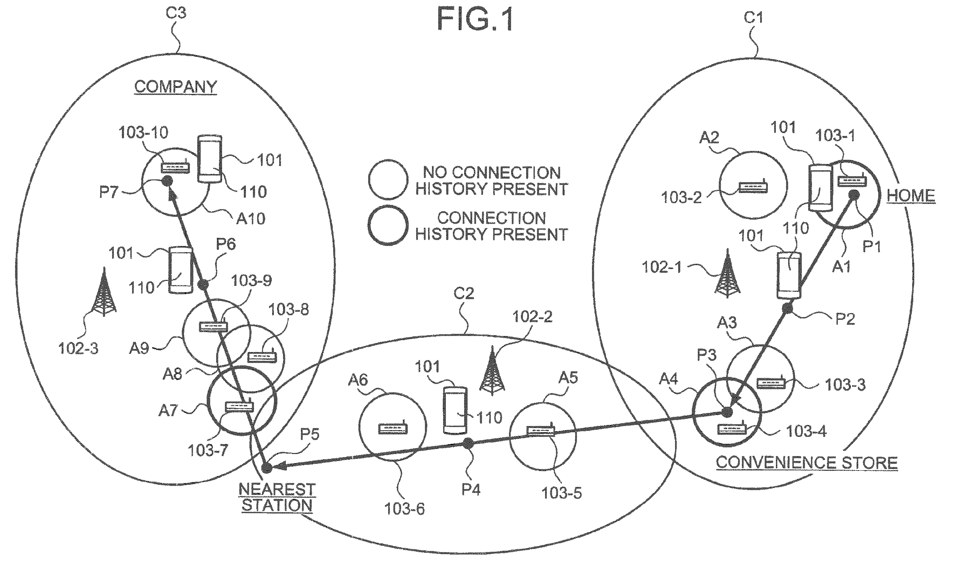

FIG. 1 is an explanatory view of an example of a communication control method according to a first embodiment. In FIG. 1, a communication apparatus 101 is a computer capable of wireless communication with base stations 102 and 103. The communication apparatus 101 has a screen 110 that displays various types of information. For example, the communication apparatus 101 is a smart phone, a cellular phone, a tablet-type personal computer (PC), a personal handy-phone system (PHS), etc.

The base stations 102 and 103 are wireless stations that can communicate wirelessly with a communication apparatus 101 in each communication area and that act as base stations for allowing the communication apparatus 101 to connect to the network. For example, the base stations 102 and 103 are base stations of a mobile communication network (cellular phone network) or access points of a wireless local area network (LAN), interspersed throughout the areas.

The communication apparatus 101 detects the base stations 102 and 103 by respectively different detection operations to enable connection to the network via the detected base station 102 or 103. The network is for example the mobile communication network, the LAN, a wide area network (WAN), the Internet, etc.

As used herein, the "detection operation" refers to a so-called scanning operation for searching for a communicable base station 102 or 103 among the base stations 102 and 103 interspersed throughout the areas. The detection operations for detecting the base stations 102 and 103 differ depending on for example, differences in communication method, communication standards, communication performance, communication service, etc. of the wireless communication.

To detect the base station 103, the communication apparatus 101 performs a detection operation different from the detection operation for detecting the base station 102. For this reason, the communication apparatus 101 consumes power through the detection operation for detecting the base station 102 and consumes power through the detection operation for detecting the base station 103.

In the following description, a base station of the mobile communication network is used as an example of the base station 102 while an access point of the wireless LAN is used as an example of the base station 103. A communication area of the base station 102 is referred to as a "cell" and the base station 103 is referred to as an "access point 103".

In the example of FIG. 1, base stations 102-1 to 102-3 are depicted as the base station 102 of the mobile communication network and access points 103-1 to 103-10 are depicted as the access points 103 of the wireless LAN. Cells C1 to C3 of the base stations 102-1 to 102-3 are also depicted together with communication areas A1 to A10 of the access points 103-1 to 103-10.

For example, the access points 103 of the wireless LAN tends to have a faster maximum communication speed with a higher transmission efficiency but have a narrower communication area than those of the base stations 102 of the mobile communication network. Use of the access points 103 of the wireless LAN is often limited to only users subscribing a specific service.

In a case where no available access point 103 exists around the communication apparatus 101, it is not desirable for the communication apparatus 101 to perform the detection operation for the access point 103. When using the access point 103, the user may specify the start of the detection operation for the access point 103. In this case, the user is required to perform an input operation and may not know the position of an available access point 103.

Thus, in the first embodiment, a communication apparatus 101 determines the presence or absence of a connection history indicating connection to a wireless LAN access point 103 of a base station 102 of a mobile communication network in which the communication apparatus is located, based on a transition from a non-display state to a display state of the screen 110. The communication apparatus 101 starts the detection operation for the access point 103 if a connection history for the access point 103 is present.

As a result, the communication apparatus 101 prevents the impairment of the usability and suppresses the power consumption required for the detection operation for the access point 103. The communication apparatus 101 is assumed to periodically perform the detection operation for detecting the base station 102 of the mobile communication network. An example of the communication control process of the communication apparatus 101 according to the first embodiment will hereinafter be described.

(1) The communication apparatus 101 detects a transition from a non-display state to a display state of the screen 110. The display state of non-display (screen off) refers to, for example, a state where power supply to the screen 110 is suspended. The display state of display (screen on) refers to, for example, a state where power supply to the screen 110 is being performed.

For example, the communication apparatus 101 receives a user input operation for switching the display state of the screen 110 from the non-display state to the display state, to thereby detect a transition from a non-display state to a display state of the screen 110. In the example of FIG. 1, a transition from a non-display state to a display state of the screen 110 is detected at a point P1 where the home of the user of the communication apparatus 101 is located.

(2) Upon detecting a transition from a non-display state to a display state of the screen 110, the communication apparatus 101 determines based on connection history information whether a connection history is present for an access point 103 in a cell of the base station 102 in which the communication apparatus is located.

As used herein, the connection history information is information for specifying, among a cell group (e.g., cells C1 to C3), a cell in which a connection operation to the access point 103 is performed. The connection operation to the access point 103 is an operation for connecting via the access point 103 to a network such as Internet.

A connection history for the access point 103 is a history indicating that a connection process of connecting to the access point 103 has been normally completed by the communication apparatus 101. The connection process of connecting to the access point 103 includes for example a user authentication process of the communication apparatus 101. A cell having a connection history for the access point 103 is a cell having a higher possibility of having a user available access point 103 therein, as compared with a cell having no connection history for the access point 103.

In FIG. 1, a bold-circled communication area of the access point 103 designates a communication area of the access point 103, having a connection history of the communication apparatus 101.

For example, at a point P1, the communication apparatus 101 communicates with the base station 102-1 of the mobile communication network to thereby specify the cell C1 of the base station 102-1 in which the communication apparatus is located. The communication apparatus 101 then refers to the connection history information to determine whether a connection history for the access point 103 in the specified cell C1 exists.

The example of FIG. 1 depicts the access points 103-1 and 103-4 having a history of connection in the cell C1 of the base station 102-1. Therefore, the communication apparatus 101 determines that a connection history for the access point 103 in the cell C1 of the base station 102-1 in which the communication apparatus is located exists.

(3) The communication apparatus 101 controls the detection operation for the access point 103 based on the obtained determination result. For example, if the communication apparatus 101 determines that a connection history for the access point 103 exists, the communication apparatus 101 starts the detection operation for the access point 103. On the other hand, if the communication apparatus 101 determines that no connection history for the access point 103 exists, the communication apparatus 101 does not start the detection operation for the access point 103.

In the example of FIG. 1, a connection history for the access point 103 in the cell C1 exists and therefore, the communication apparatus 101 starts the detection operation for the access point 103. As a result, the access point 103-1 for example is detected and the communication apparatus 101 can connect to a network such as the Internet by way of the access point 103-1.

(4) The communication apparatus 101 detects a transition from a display state to a non-display state of the screen 110. For example, the communication apparatus 101 receives a user input operation for switching the display state of the screen 110 from the display state to the non-display state and thereby, detects a transition from the display state to the non-display state of the screen 110.

In the example of FIG. 1, a transition from a display state to a non-display state of the screen 110 is detected at a point P2 en route from the point P1 where the home of the user is located to a point P3 where a convenience store is located.

(5) Upon detecting a transition from a display state to a non-display state of the screen 110, the communication apparatus 101 stops the detection operation for the access point 103. Thus, the detection operation for the access point 103 is suspended in response to a transition from the display state to the non-display state of the screen 110 so that the power consumption of the communication apparatus 101 can be suppressed.

In this manner, the communication apparatus 101 controls the detection operation for the access point 103 based on a transition of the display state of the screen 110.

For example, suppose that a transition from a non-display state to a display state of the screen 110 is detected at a point P4 en route from the point P3 where the convenience store is located to a point P5 where a nearest station is located. In this case, the communication apparatus 101 determines whether a connection history for an access point 103 is present in the cell C2 of the base station 102-2 in which the communication apparatus is located.

In the example of FIG. 1, in the cell 2, due to the absence of an access point 103 having a connection history, the communication apparatus 101 determines that connection history for an access point 103 is not present in the cell C2. In this case, the communication apparatus 101 does not start the detection operation for the access point 103 in the cell C2.

For example, suppose that a transition from a non-display state to a display state of the screen 110 is detected at a point P6 en route from the point P5 where the nearest station is located to a point P7 where a company is located. In this case, the communication apparatus 101 determines whether a connection history for an access point 103 is present in the cell C3 of the base station 102-3 in which the communication apparatus is located.

In the example of FIG. 1, due to the presence of the access point 103-7 having a connection history in the cell 3, the communication apparatus 101 determines that for the cell C3, connection history for an access point 103 is present. Hence, the communication apparatus 101 starts the detection operation for the access point 103 in the cell C3.

According to the communication apparatus 101 described above, when the screen 110 transitions from a non-display state to a display state, the communication apparatus 101 can determine whether a connection history for the access point 103 in the cell of the base station 102 in which the communication apparatus 101 is located exists. In the case of the presence of the connection history for the access point 103, the communication apparatus 101 can start the detection operation for the access point 103.

Thus, based on a transition from a non-display state to a display state of the screen 110, an available access point 103 can be detected in a cell having a connection history for the access point 103 without the need for a user input operation, thereby preventing drops in usability.

According to the communication apparatus 101, when no connection history for the access point 103 is present for the cell of the base station 102 and in which the communication apparatus is located, the communication apparatus 101 does not start the detection operation for the access point 103. This suppresses the detection operation for the access point 103 in a cell where no available access point is located and achieves a reduction in the power consumption of the communication apparatus 101 as well as a reduction in the traffic between the communication apparatus 101 and the access point 103.

### (System Configuration Example of Communication System 200)

A system configuration example of a communication system 200 according to the first embodiment will be described.

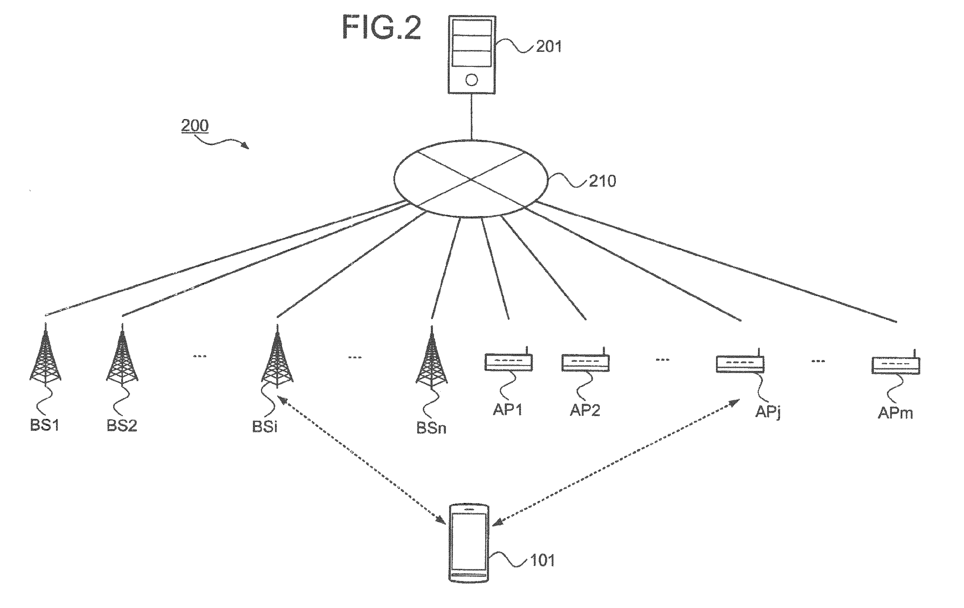

FIG. 2 is an explanatory view of a system configuration example of the communication system 200. In FIG. 2, the communication system 200 includes the communication apparatus 101, base stations BS1 to BSn, access points AP1 to APm, and a server 201. In the communication system 200, the base stations BS1 to BSn, the access points AP1 to APm, and the server 201 are connected together by way of a network 210. The network 210 includes, for example, the mobile communication network, LAN, WAN, Internet, etc.

The base stations BS1 to BSn are base stations of the mobile communication network, interspersed throughout the areas. In the following description, any arbitrary base station among the base stations BS1 to BSn may be referred to as "base station BSi" and the communication area indicative of a communicable range of the base station BSi may be referred to as "cell Ci" (i=1, 2, ..., n). The base station 102 depicted in FIG. 1 corresponds to the base station BSi.

The access points AP1 to APm are base stations of the wireless LAN, interspersed throughout the areas. The access points AP1 to APm may include mobile access points or access points equipped on a mobile vehicle such as a train and a bus. In the following description, any arbitrary access point among the access points AP1 to APm may be referred to as "access point APj" and the communication area indicative of a communicable range of the access point APj may be referred to as "communication area Aj" (j=1, 2, ..., m). The access point 103 depicted in FIG. 1 corresponds to the access point APj.

The communication apparatus 101 can wirelessly communicate with the base station BSi in the cell Ci and can connect to the network 210 via the base station BSi. The communication apparatus 101 can wirelessly communicate with the access point APj in the communication area Aj and can connect to the network 210 via the access point APj.

The server 201 is a computer that provides a service to the communication apparatus 101. The service is information processing provided to the communication apparatus 101, such as an email service, a telephone service, and a web service. For example, the server 201 includes an email server, a web server, an application server, and a database server.

Although a single communication apparatus 101 and a single server 201 are depicted in FIG. 2, configuration is not limited hereto. For example, the communication apparatus 101 may be disposed for each of the users utilizing the communication system 200, and the server 201 may be disposed for each of service providers.

### (Example of Hardware Configuration of Communication Apparatus 101)

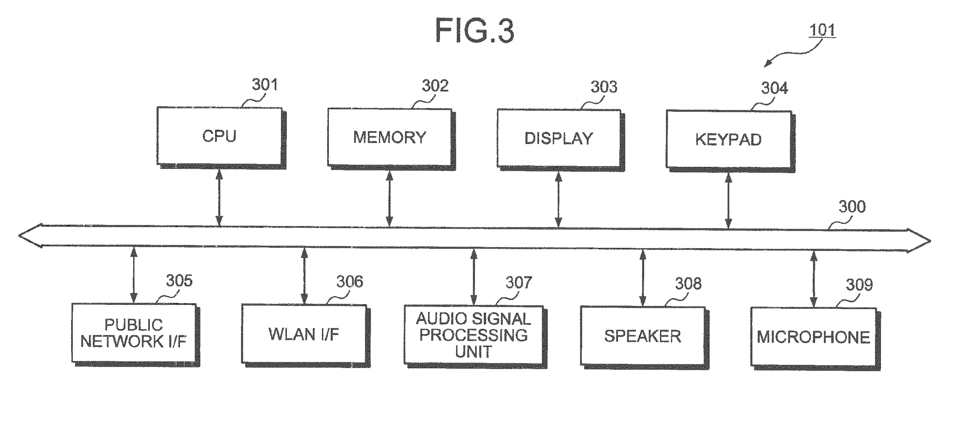

FIG. 3 is a block diagram of an example of a hardware configuration of the communication apparatus 101. As depicted in FIG. 3, the communication apparatus includes a CPU 301, memory 302, a display 303, a keypad 304, a public network interface (I/F) 305, a wireless LAN (WLAN) I/F 306, audio signal processing unit 307, a speaker 308, and a microphone 309, respectively connected to a bus 300.

The CPU 301 governs overall control of the communication apparatus 101. The memory 302, for example, includes read-only memory (ROM), random access memory (RAM), flash ROM, etc. For example, the flash ROM stores an operating system (OS) program; the ROM stores application programs; and the RAM is used as a work area of the CPU 301. Programs stored by the memory 302 are loaded onto the CPU 301 and the encoded processing is executed by the CPU 301.

The display 303 displays, for example, data such as text, images, functional information, etc., in addition to a cursor, icons, and/or tool boxes. A liquid crystal display, an organic electroluminescence (EL) display, and the like may be employed as the display 107. The screen 110 depicted in FIG. 1 corresponds to the display 303.

The keypad 304 includes, for example, keys for inputting letters, numerals, and various instructions and performs the input of data. Alternatively, a touch-panel-type input pad or numeric keypad, etc. may be adopted.

The public network I/F 305 is connected to the network 210 via the base station BSi of the mobile communication network, and is connected to other computers (e.g., the server 201) via the network 210. The public network I/F 305 administers an internal interface with the network 210 and controls the input and output of data with respect to other computers.

The WLAN I/F 306 is connected to the network 210 via an access point APj of a wireless LAN, and is connected to other computer via the network 210. The WLAN I/F 306 administers an internal interface with the network 210 and controls the input and output of data with respect to other computers.

The audio signal processing unit 307 is connected to the speaker 308 and the microphone 309. For example, sound received by the microphone 309 is A/D converted by the audio signal processing unit 307; and from the speaker, the sound is output.

Although not depicted, in addition to the components above, the communication apparatus 101 further includes, for example, a memory controller that controls the reading and writing of data with respect to the memory 302, a power management unit (PMU) that supplies source voltage to the components; a battery; various timers; a global positioning system (GPS) unit; etc. Hardware of the base station BSi and of the access point APi includes, for example, a CPU, memory, an I/F, auxiliary memory apparatuses, a bus, etc.

### (Contents of Connection Table 400)

A connection table 400 used by the communication apparatus 101 will be described. The connection table 400 is implemented by the memory 302 depicted in FIG. 3, for example.

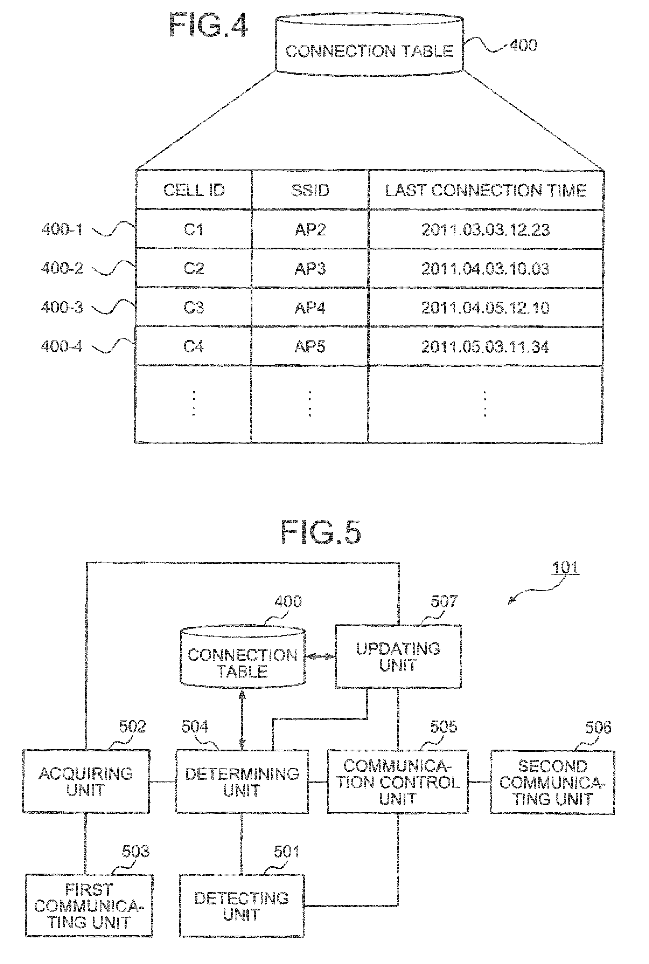

FIG. 4 is an explanatory view (1) of an example of the contents of the connection table 400. In FIG. 4, the connection table 400 has fields for cell IDs, SSIDs, and last connection times. By entering information into the fields, the connection information is stored as records (e.g., connection records 400-1 to 400-4).

A cell ID is identification information for identifying the base station BSi of the mobile communication network. A service set identifier (SSID) is identification information for identifying the access point APj of the wireless LAN. For example, an extended SSID (ESSID) or a basic SSID (BSSID) can be used as the SSID. The last connection time indicates the date and time when the last connection to the access point APj was made.

In the case of the connection record 400-1, for example, the cell ID "C1", the SSID "AP2", and the last connection time "2011,03.03.12.23" are shown associated with one another. The connection record 400-1 enables identification of the date and time "March 3, 2011 at 12:23" when the communication apparatus 101 last connected to the access point AP2 in the cell C1 of the base station BS1. The connection history information described in FIG. 1 corresponds to the connection information in the connection table 400.

### (Example of Functional Configuration of Communication Apparatus 101)

FIG. 5 is a block diagram of an example of a functional configuration of the communication apparatus 101 according to the first embodiment. In FIG. 5, the communication apparatus 101 is configured to include a detecting unit 501, an acquiring unit 502, a first communicating unit 503, a determining unit 504, a communication control unit 505, a second communicating unit 506, and an updating unit 507. The detecting unit 501 to the updating unit 507 function as a control unit and are implemented by for example, causing a CPU 301 to execute a program stored in the memory 302 of FIG. 3 or by use of hardware such as the public network I/F 305 and the WLAN I/F 306. The processing results of the function units are stored in the memory 302 for example.

The detecting unit 501 has a function to detect a transition from a non-display state to a display state of the display 303 (see FIG. 3). For example, when the state of the display 303 is switched from the non-display state to the display state through a user input operation via the keypad 304, the detecting unit 501 detects a transition from the non-display state to the display state of the display 303.

For example, when a resume function resumes the operation from the state immediately before a transition to the non-display state of the display 303, the detecting unit 501 may detect the transition from the non-display state to the display state of the display 303. For example, when an application such as an alarm activated at a certain time goes on, the detecting unit 501 may detect the transition from the non-display state to the display state of the display 303.

The detecting unit 501 has a function of detecting a transition from the display state to the non-display state of the display 303. For example, when the state of the display 303 is switched from the display state to the non-display state through a user input operation via the keypad 304, the detecting unit 501 detects a transition from the display state to the non-display state of the display 303.

For example, when a screen off timer reaches a predetermined value, the detecting unit 501 may detect the transition from the display state to the non-display state of the display 303. The screen off timer is a timer for measuring the time of the transition from the display state to the non-display state of the display 303. For example, in the case of a transition to a power-saving mode to control the power supply to the display 303, the detecting unit may detect the transition from the display state to the non-display state of the display 303.

The acquiring unit 502 has a function of acquiring a cell ID for identifying a cell Ci in which the communication apparatus is located, among the cells C1 to Cn of the base stations BS1 to BSn. For example, the acquiring unit 502 acquires, as the cell ID of the cell Ci in which the communication apparatus is located, a cell ID included in base station information received by the first communicating unit 503 communicating with the base station BSi. The first communicating unit 503 receives periodically (e.g., every 2.56 seconds) the base station information including the cell ID of the cell Ci, from a communicable base station BSi among the base stations BS1 to BSn.

The base stations BS1 to BSn may include plural base stations with which the communication apparatus 101 is communicable. In this case, for example, the acquiring unit 502 may acquire, as the cell ID for identifying a cell Ci in which the communication apparatus is located, a cell ID included in the base station information of a base station whose signal strength is greatest among the communicable base stations.

The determining unit 504 has a function of determining whether a connection record is present for an access point APj in the cell Ci in which the communication apparatus is located, when the detecting unit 501 detects a transition of the display state from the non-display state to the display state. As used herein, the connection record for an access point APj is a connection history indicative of the completion of a connection operation with respect to the access point APj. A connection operation with respect to the access point APj is an operation of the communication apparatus 101 for connecting to the network 210 by way of the access point APj.

For example, first, the determining unit 504 refers to the connection table 400 depicted in FIG. 4, to determine whether an SSID of the access point APj is stored corresponding to the cell ID acquired by the acquiring unit 502. If the SSID of the access point APj is present, the determining unit 504 determines that the connection record is present for the access point APj in the cell Ci in which the communication apparatus is located. On the other hand, if no SSID of the access point APj is present, the determining unit 504 determines that no connection record is present for the access point APj in the cell Ci in which the communication apparatus 101 is located.

The communication control unit 505 has a function of controlling the detection operation for the access point APj based on the determination result obtained by the determining unit 504. For example, if it is determined that a connection record is present for the access point APj in the cell Ci in which the communication apparatus is located, the communication control unit 505 controls the second communicating unit 506 communicating with the access point APj, to start a detection operation for the access point APj. On the other hand, if it is determined that no connection record is present for the access point APj in the cell Ci in which the communication apparatus is located, the communication control unit 505 does not start the detection operation for the access point APj.

Describing in more detail, if it is determined that a connection record is present for the access point APj in the cell Ci in which the communication apparatus is located, the communication control unit 505 sets a detection operation flag to ON. The detection operation flag is a flag indicative of whether the detection operation for the access point APj is to be performed periodically. The detection operation flag is stored in, for example, a register of the memory 302 or the CPU 301.

If the detection operation flag is ON, the communication control unit 505 controls the second communicating unit 506 to cyclically perform the detection operation for the access point APj. The cycle of the detection operation for the access point APj can be set arbitrarily. For example, a timer controls the start timing when the detection operation for the access point APj is performed periodically.

An example of the detection operation for the access point APj will be described. For example, the communication control unit 505 controls the second communicating unit 506 to send a probe request signal to channels (CHs) used in the wireless LAN. As a result, the communication control unit 505 receives a probe response signal that includes the SSID so that a communicable access point APj can be detected.

The communication control unit 505 has a function of controlling the second communicating unit 506 to start the connection operation for the detected access point APj. For example, if a connection record for the detected access point APj is present, the communication control unit 505 controls the second communicating unit 506 to start the connection operation for the access point APj.

On the other hand, if a connection record for the detected access point APj is not present, the communication control unit 505 does not start the connection operation for the access point APj. The connection record for the detected access point APj is stored for example in the memory 302 corresponding to the SSID of the access point APj.

The communication control unit 505 may control the second communicating unit 506 through a user input operation to start the connection operation for the detected access point APj. For example, at the time of the first connection to the access point APj, the communication control unit 505 controls the second communicating unit 506 through a user input operation to start the connection operation for the detected access point APj.

The updating unit 507 has a function of updating the connection time to the access point APj when the connection to the access point APj is completed. As used herein, the connection time refers to, for example, the last time of a connection to the access point APj.

For example, first, the updating unit 507 retrieves from the connection table 400 depicted in FIG. 4, connection information corresponding to the cell ID of the cell Ci in which the communication apparatus is located. The updating unit 507 overwrites the SSID of the detected access point APj into the SSID field of the retrieved connection information. The updating unit 507 overwrites the connection time to the detected access point APj into the last connection time field of the retrieved connection information.

If a connection record is not present for the access point APj in the cell Ci in which the communication apparatus is located, connection information is not retrieved that corresponds to the cell ID of the cell Ci in which the communication apparatus is located. In this case, the updating unit 507 enters into the fields of the connection table 400, the cell ID of the cell Ci in which the communication apparatus is located, the SSID of the detected access point APj, and the connection time. As a result, new connection information is newly entered as a record in the connection table 400.

In the case of entering new connection information in the connection table 400, the updating unit 507 may calculate the total number M of connection records stored in the connection table 400. Then, if the calculated total number M reaches or exceeds a threshold value Mₘₐₓ, the updating unit 507 may delete the connection record whose last connection time is oldest, among the connection records stored in the connection table 400.

The threshold value Mₘₐₓ represents an upper limit for the number of the connection records that can be entered in the connection table 400. The threshold value Mₘₐₓ can be set arbitrarily and, for example, is stored in the previously installed memory 302. Thus, by setting the upper limit value for the total number M of connection records that can be entered in the connection table 400, the number of records in the connection table 400 can be prevented from increasing over the upper limit value.

When the detecting unit 501 detects a transition from the display state to the non-display state of the display 303, the communication control unit 505 may stop the detection operation for the access point APj. For example, in the case of a transition to the non-display state of the display 303, the communication control unit 505 may not perform the detection operation for the access point APj even though the detection operation flag is ON or the detection operation flag may be set to OFF. This suppresses the detection operation for the access point APj when the state of the display 303 is the non-display state and thereby suppresses the power consumption of the communication apparatus 101.

If it is determined by the determining unit 504 as a result of the start of the detection operation for the access point APj, that a connection record for the access point APj is not present, the communication control unit 505 may stop the detection operation for the access point APj. For example, if a connection record is not present for the access point APj in the cell Ci in which the communication apparatus is located, the communication control unit 505 sets the detection operation flag to OFF. This can bring the cyclically performed detection operation for the access point APj to an end.

### (Operation Example of Communication Apparatus 101)

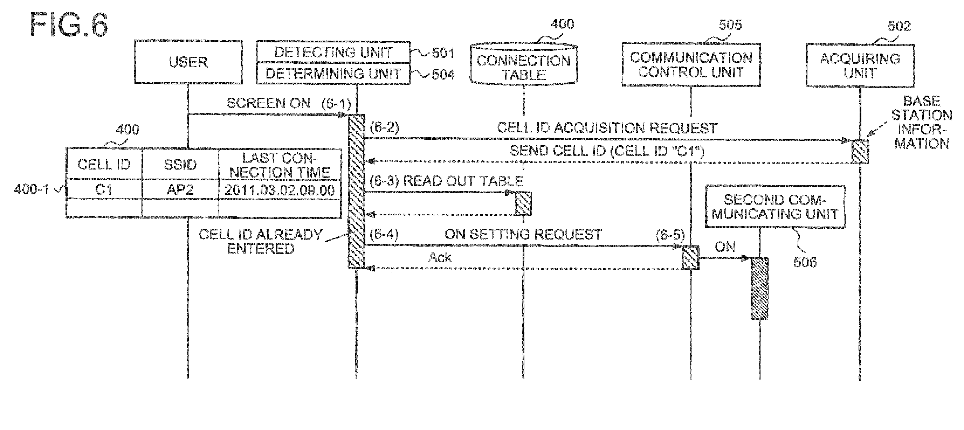

With reference to FIGs. 6 to 10, an operation example of the communication apparatus 101 according to the first embodiment will be described.

FIG. 6 is an explanatory view (1) of an operation example of the communication apparatus 101 according to the first embodiment. The operation example of the communication apparatus 101 depicted in FIG. 6 is an example of operation performed when the detection operation flag is set to ON in response to a transition from the non-display state to the display state of the display 303.

(6-1) The detecting unit 501 detects a transition from the non-display state to the display state of the display 303. In the example of FIG. 6, the transition from the non-display state to the display state of the display 303 is detected as a result of switching from the non-display state to the display state of the display 303 through a user input operation.

(6-2) The determining unit 504 requests the acquiring unit 502 to acquire a cell ID of the cell Ci in which the communication apparatus is located and thereby, acquires the cell ID of the cell Ci in which the communication apparatus is located. In the example of FIG. 6, "C1" is acquired as the cell ID of the cell Ci in which the communication apparatus is located.

(6-3) The determining unit 504 refers to the connection table 400 to determine whether a connection record is present for the access point APj in the cell Ci in which the communication apparatus is located. In the example of FIG. 6, connection record 400-1 corresponding to the acquired cell ID"C1" is already entered and hence, it is determined that a connection record for the access point APj is present.

(6-4) The determining unit 504 sends to the communication control unit 505, an ON setting request for the detection operation flag. At this time, if a read-out detection operation flag is OFF, the determining unit 504 may send the ON setting request for the detection operation flag to the communication control unit 505. This can stop the ON setting request sending when the detection operation flag is ON, alleviating the processing load of the communication apparatus 101.

(6-5) Upon receiving an ON setting request for the detection operation flag, the communication control unit 505 returns an Ack to the determining unit 504 and if the detection operation flag is OFF, sets the detection operation flag to ON. As a result, the communication control unit 505 controls the communicating units to cyclically perform the detection operation for the access point APj.

In this manner, according to the communication apparatus 101, when the state of the display 303 transitions from the non-display state to the display state, the detection operation for the access point APj can be started if a connection record is present for the access point APj in the cell Ci in which the communication apparatus 101 is located.

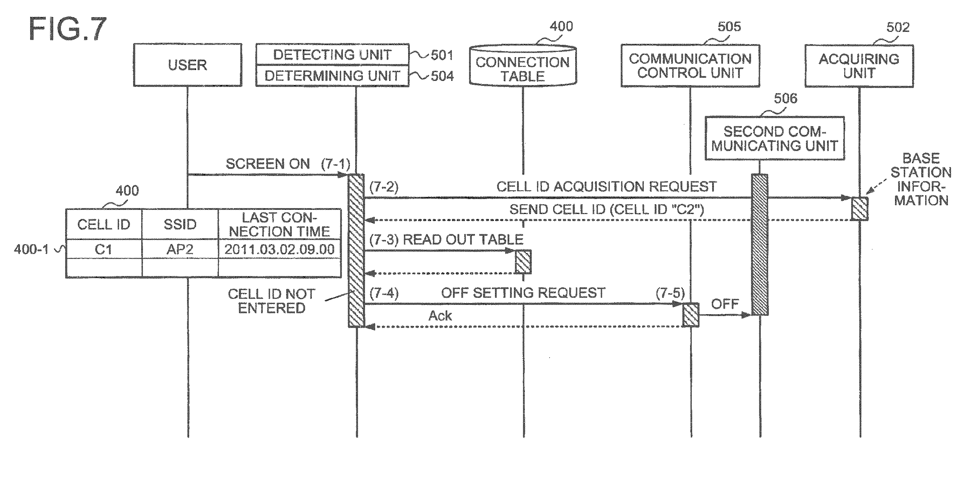

FIG. 7 is an explanatory view (2) of an operation example of the communication apparatus 101 according to the first embodiment. The operation example of the communication apparatus 101 depicted in FIG. 7 is an example of operation when the detection operation flag is set to OFF in response to a transition from the non-display state to the display state of the display 303.

(7-1) The detecting unit 501 detects a transition from the display state to the non-display state of the display 303. In the example of FIG. 7, the transition from the non-display state to the display state of the display 303 is detected as a result of switching from the non-display state to the display state of the display 303 through a user input operation.

(7-2) The determining unit 504 requests the acquiring unit 502 to acquire a cell ID of the cell Ci in which the communication apparatus is located and thereby, acquires the cell ID of the cell Ci in which the communication apparatus is located. In the example of FIG. 7, "C2" is acquired as the cell ID of the cell Ci in which the communication apparatus is located.

(7-3) The determining unit 504 refers to the connection table 400 to determine whether a connection record is present for the access point APj in the cell Ci in which the communication apparatus is located. In the example of FIG.7, connection information corresponding to the acquired cell ID "C2" is not entered and hence, it is determined that no connection record for the access point APj is present.

(7-4) The determining unit 504 sends to the communication control unit 505, an OFF setting request for the detection operation flag. At this time, when a read-out detection operation flag is ON, the determining unit 504 may send the OFF setting request for the detection operation flag to the communication control unit 505. This can stop the OFF setting request sending when the detection operation flag is OFF, alleviating the processing load of the communication apparatus 101.

(7-5) Upon receiving an OFF setting request for the detection operation flag, the communication control unit 505 returns an Ack to the determining unit 504 and if the detection operation flag is ON, sets the detection operation flag to OFF. As a result, the communication control unit 505 terminates the detection operation for the access point APj.

In this manner, according to the communication apparatus 101, when the state of the display 303 transitions from the non-display state to the display state, the detection operation for the access point APj can be terminated if no connection record is present for the access point APj in the cell Ci in which the communication apparatus 101 is located.

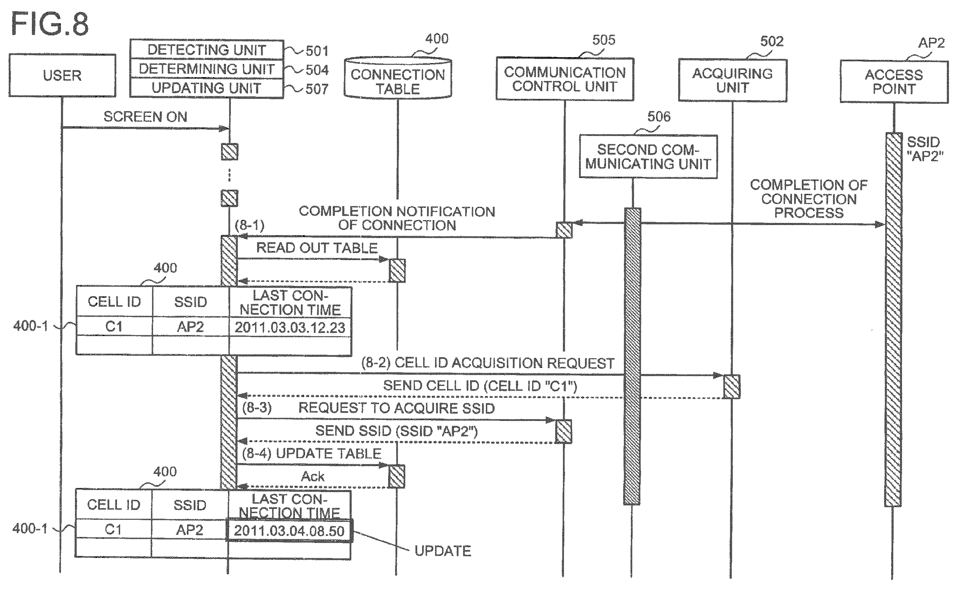

FIG. 8 is an explanatory view (3) of an operation example of the communication apparatus 101 according to the first embodiment. The operation example of the communication apparatus 101 depicted in FIG. 8 is an example of operation performed when connection to the access point APj is completed.

(8-1) Upon receiving from the communication control unit 505, completion notification concerning connection to the access point APj, the updating unit 507 reads out connection information from the connection table 400.

(8-2) The updating unit 507 requests the acquiring unit 502 to acquire the cell ID of the cell Ci in which the communication apparatus is located and thereby, acquires the cell ID of the cell Ci in which the communication apparatus is located. In the example of FIG. 8, "C1" is acquired as the cell ID of the cell Ci in which the communication apparatus is located.

(8-3) The updating unit 507 requests the communication control unit 505 to acquire the SSID of the access point APj to which connection has been completed and thereby, acquires the SSID of the access point APj currently connected. In the example of FIG. 8, "AP2" is acquired as the SSID of the access point APj currently connected.

(8-4) The updating unit 507 updates the contents of the connection table 400. For example, first, the updating unit 507 retrieves from among read-out connection records, connection records corresponding to the cell ID of the cell Ci in which the communication apparatus 101 is located. The updating unit 507 then determines whether the SSID of the access point APj currently connected is among the retrieved connection records.

In the example of FIG. 8, the connection record 400-1 is retrieved that corresponds to the cell ID "C1" of the cell C1 in which the communication apparatus 101 is located. The SSID "AP2" of the access point AP2 currently connected is in the retrieved connection record 400-1. In this case, the updating unit 507 overwrites "2011.03.04.08.50", i.e., the connection time of connection to the access point AP2 into the last connection time field of the connection record 400-1.

The connection time of connection to the access point AP2 may be for example the reception time when completion notification concerning connection to the access point APj is received or may be included in the completion notification concerning the connection to the access point APj. The reception time is measured, for example, by a measuring function of the communication apparatus 101.

In this manner, according to the communication apparatus 101, when connection to the access point APj is completed, the connection information in the connection table 400 and corresponding to the cell ID of the cell Ci in which the communication apparatus 101 is located can be updated.

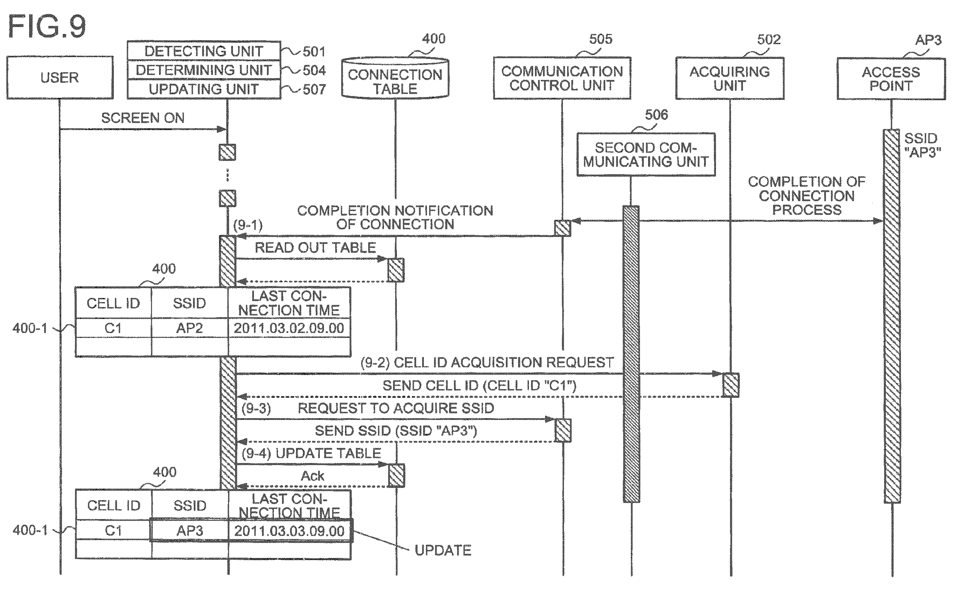

FIG. 9 is an explanatory view (4) of an operation example of the communication apparatus 101 according to the first embodiment. The operation example of the communication apparatus 101 depicted in FIG. 9 is an example of operation performed when connection to the access point APj is completed.

(9-1) Upon receiving from the communication control unit 505, completion notification concerning the connection to the access point APj, the updating unit 507 reads out connection information from the connection table 400.

(9-2) The updating unit 507 requests the acquiring unit 502 to acquire the cell ID of the cell Ci in which the communication apparatus is located and thereby, acquires the cell ID of the cell Ci in which the communication apparatus is located. In the example of FIG.9, "C1" is acquired as the cell ID of the cell Ci in which the communication apparatus is located.

(9-3) The updating unit 507 requests the communication control unit 505 to acquire the SSID of the access point APj to which connection has been completed and thereby, acquires the SSID of the access point APj currently connected. In the example of FIG. 9, "AP3" is acquired as the SSID of the access point APj currently connected.

(9-4) The updating unit 507 updates the contents of the connection table 400. For example, first, the updating unit 507 retrieves from read-out connection information, connection information corresponding to the cell ID of the cell Ci in which the communication apparatus 101 is located. The updating unit 507 then determines whether the SSID of the access point APj currently connected is in the retrieved connection information.

In the example of FIG. 9, the connection record 400-1, which corresponds to the cell ID "C1" of the cell C1 in which the communication apparatus 101 is located, is retrieved. The SSID "AP3" of the access point AP3 currently connected is not in the retrieved connection record 400-1. In this case, the updating unit 507 overwrites the SSID "AP3" of the access point AP3 currently connected, into the SSID field of the connection record 400-1. Furthermore, the updating unit 507 overwrites "2011.03.03.09.00", i.e., the connection time of connection to the access point AP3, into the last connection time field of the connection record 400-1.

In this manner, according to the communication apparatus 101, when the connection to the access point APj is completed, the connection information that corresponds to the cell ID of the cell Ci in which the communication apparatus 101 is located can be updated in the connection table 400.

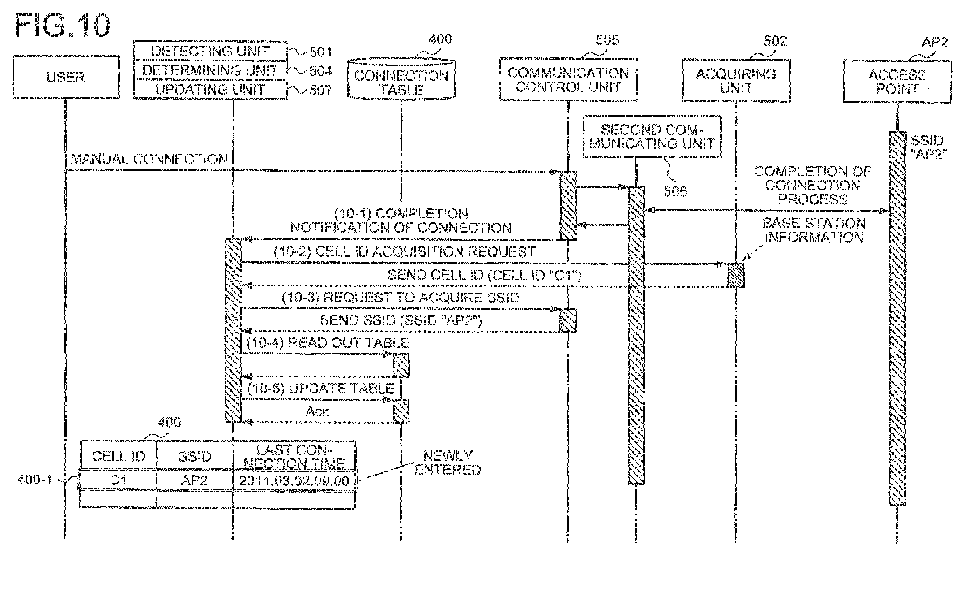

FIG. 10 is an explanatory view (5) of an operation example of the communication apparatus 101 according to the first embodiment. The operation example of the communication apparatus 101 depicted in FIG. 10 is an example of operation performed when operation for connection to the access point APj is started.

(10-1) As a result of starting operation for connection to the access point APj through a user input operation, the updating unit 507 receives from the communication control unit 505, completion notification concerning the connection to the access point APj.

(10-2) The updating unit 507 requests the acquiring unit 502 to acquire the cell ID of the cell Ci in which the communication apparatus is located and thereby, acquires the cell ID of the cell Ci in which the communication apparatus is located. In the example of FIG. 10, "C1" is acquired as the cell ID of the cell Ci in which the communication apparatus is located.

(10-3) The updating unit 507 requests the communication control unit 505 to acquire the SSID of the access point APj to which connection has been completed and thereby, acquires the SSID of the access point APj currently connected. In the example of FIG. 10, "AP2" is acquired as the SSID of the access point APj currently connected.

(10-4) The updating unit 507 reads out connection information from the connection table 400. The order of processes (10-2) to (10-4) is arbitrary.

The updating unit 507 updates the contents of the connection table 400. For example, first, the updating unit 507 retrieves from read-out connection information, connection information corresponding to the cell ID of the cell Ci in which the communication apparatus 101 is located. A case is assumed where connection to the access point APj is made in the cell C1 in which the communication apparatus 101 is located.

Further, connection information that corresponds to the cell ID of the cell Ci in which the communication apparatus is located is not retrieved. In this case, the updating unit 507 enters into the fields in the connection table 400, the cell ID of the cell Ci in which the communication apparatus is located, the SSID of the access point APj currently connected, and the connection time.

As a result, new connection information is entered as a record in the connection table 400. In the example of FIG. 10, the cell ID "C1", the SSID "AP2", and the last connection time "2011.03.02.09.00" are entered into the fields in the connection table 400 and the connection record 400-1 is newly entered as a record.

### (Various Process Procedures of Communication Apparatus 101)

Various process procedures of the communication apparatus 101 according to the first embodiment will be described. A determination process procedure of the communication apparatus 101 will be described in which it is determined whether a track record of connection to the access point APj in the cell Ci in which the communication apparatus 101 is located, is present.

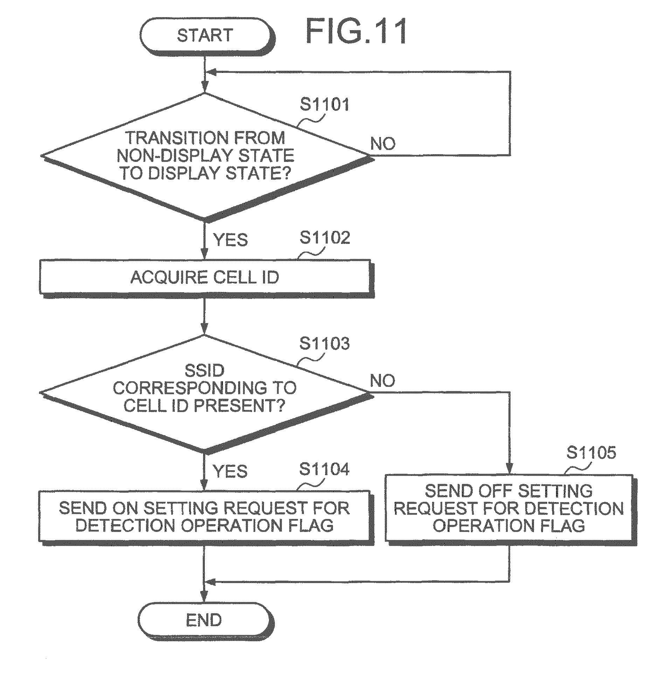

FIG. 11 is a flowchart of an example of the determination process procedure of the communication apparatus 101 according to the first embodiment. In the flowchart of FIG. 11, first, the detecting unit 501 determines whether the state of the display 303 has transitioned from the non-display state to the display state (step S1101).

The detecting unit 501 waits for a transition from the non-display state to the display state of the display 303 (step S1101: NO). When the detecting unit 501 determines that a transition from the non-display state to the display state of the display 303 has occurred (step S1101: YES), the determining unit 504 acquires from the acquiring unit 502, the cell ID of the cell Ci in which the communication apparatus is located, among the cells C1 to Cn (step S1102).

The determining unit 504 then refers to the connection table 400 to determine whether the SSID of the access point APj that is stored corresponding to the acquired cell ID is present (step S1103). If the SSID is present (step S1103: YES), the determining unit 504 sends an ON setting request for the detection operation flag to the communication control unit 505 (step S1104) and ends a series of processes according to this flowchart.

On the other hand, if the SSID is not present (step S1103: NO), the determining unit 504 sends an OFF setting request for the detection operation flag to the communication control unit 505 (step S1105) and ends the series of processes according to this flowchart.

This enables the communication control unit 505 to be notified of an ON/OFF setting request for the detection operation flag, depending on the track record of connection to the access point APj in the cell Ci in which the communication apparatus 101 is located, in response to a transition from the non-display state to the display state of the display 303.

A communication control process procedure of the communication apparatus 101 for controlling the detection operation for the access point APj will be described.

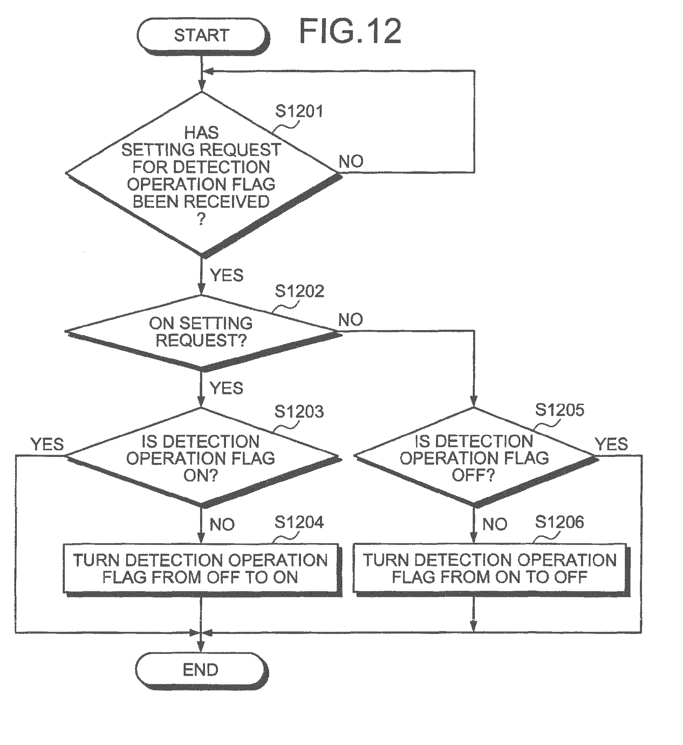

FIG. 12 is a flowchart of an example of the communication control process procedure of the communication apparatus 101 according to the first embodiment. In the flowchart of FIG. 12, the communication control unit 505 first determines whether a setting request for the detection operation flag has been received from the determining unit 504 (step S1201).

The communication control unit 505 waits for reception of a setting request for the detection operation flag (step S1201: NO). When a setting request for the detection operation flag is received (step S1201: YES), the communication control unit 505 determines whether the received setting request is an ON setting request (step S1202).

If the received setting request is an ON setting request (step S1202: YES), the communication control unit 505 determines whether the detection operation flag is set to ON (step S1203). If the detection operation flag is set to ON (step S1203: YES), the communication control unit 505 ends the series of processes according to this flowchart.

If the detection operation flag is set to OFF at step S1203 (step S1203: NO), the communication control unit 505 turns the detection operation flag from OFF to ON (step S1204) and terminates the series of processes according to this flowchart.

If the received setting request is an OFF setting request (step S1202: NO), the communication control unit 505 determines whether the detection operation flag is set to OFF (step S1205). If the detection operation flag is set to OFF (step S1205: YES), the communication control unit 505 ends the series of processes according to this flowchart.

On the other hand, if the detection operation flag is set to ON at step S1205 (step S1205: NO), the communication control unit 505 turns the detection operation flag from ON to OFF (step S1206) and terminates the series of processes according to this flowchart.

This enables the detection operation for the access point APj to be controlled depending on the track record of connection to the access point APj in the cell Ci in which the communication apparatus 101 is located.

An update process procedure of the communication apparatus 101 for updating the contents of the connection table 400 depicted in FIG. 4 will be described.

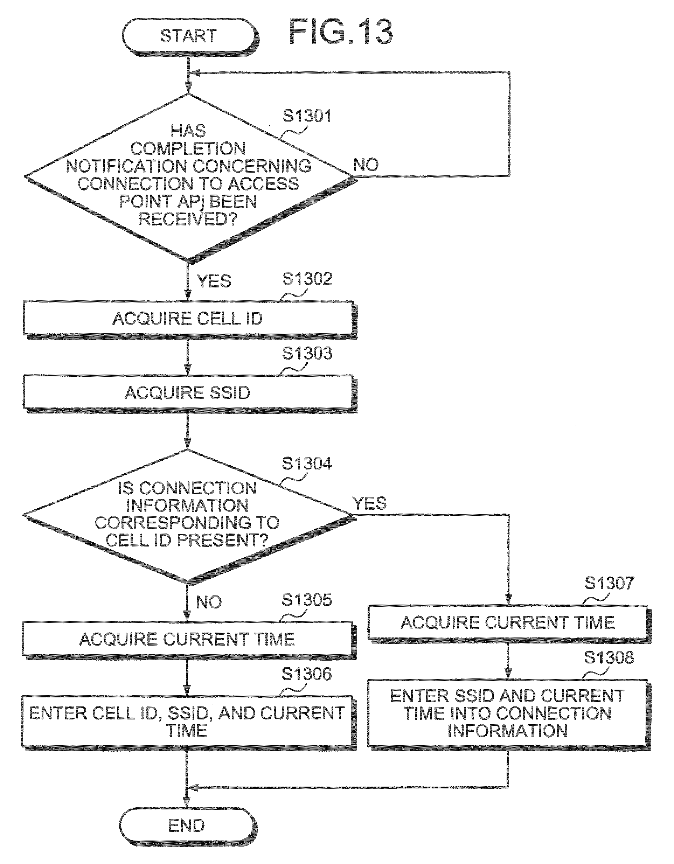

FIG. 13 is a flowchart of an example of the update process procedure of the communication apparatus 101 according to the first embodiment. In the flowchart of FIG. 13, the updating unit.507 first determines whether completion notification concerning connection to the access point APj has been received from the communication control unit 505 (step S1301).

The updating unit 507 waits for reception of completion notification concerning connection to the access point APj (step S1301: NO). When the updating unit 507 receives the connection completion notification (step S1301: YES), the updating unit 507 acquires from the acquiring unit 502, the cell ID of the cell Ci in which the communication apparatus is located (step S1302).

The updating unit 507 then acquires from the communication control unit 505, the SSID of the access point APj to which connection has been completed (step S1303). The updating unit 507 then refers to the connection table 400 to determine whether connection information corresponding to the acquired cell ID is present (step S1304).

If the connection information is not present (step S1304: NO), the updating unit 507 acquires the current time (step S1305). The updating unit 507 then enters the acquired cell ID, SSID, and current time into the fields in the connection table 400 (step S1306) and terminates the series of processes according to this flowchart. As a result, new connection information is entered as a record in the connection table 400.

If the connection information is present at step S1304 (step S1304: YES), the updating unit 507 acquires the current time (step S1307). The updating unit 507 enters the acquired SSID and current time into the SSID field and the last connection time field of the connection information corresponding to the acquired cell ID (step S1308), and terminates the series of processes according to this flowchart.

Thus, the contents of the connection table 400 can be updated according to the status of connection to the access point APj in the cell Ci in which the communication apparatus 101 is located.

As described above, according to the communication apparatus 101 of the first embodiment, when the state of the display 303 transitions from the non-display state to the display state, it can be determined whether a track record of connection to the access point APj in the cell Ci in which the communication apparatus is located exists. According to the communication apparatus 101, the detection operation for the access point APj can be started if the track record of connection to the access point APj is present.

Thus, detection of an available access point APj in a cell Ci having a track record of connection to the access point APj can be performed, without a user input operation, in response to a transition to the state of the display 303, thereby preventing the usability from being impaired.

According to the communication apparatus 101, in the case of absence of the track record of connection to the access point APj in the cell Ci in which the communication apparatus is located, control can be provided so that the detection operation for the access point APj is not started. This enables the detection operation for an access point APj in a cell Ci that does not have an available access point APj to be suppressed and thereby, achieves a reduction in the power consumption of the communication apparatus 101.

According to the communication apparatus 101, the detection operation for the access point APj can be suspended if the state of the display 303 transitions from the display state to the non-display state as a result of starting the detection operation for the access point APj. This enables the detection operation for the access point APj to be suppressed when the state of the display 303 is the non-display state and thereby, suppresses the power consumption of the communication apparatus 101.

According to the communication apparatus 101, in the case of entering new connection information into the connection table 400, it can be determined whether the total number M of records of connection information entered in the connection table 400 is at least the threshold value Mₘₐₓ. According to the communication apparatus 101, if the total number M is greater than or equal to the threshold value Mₘₐₓ, connection information having the oldest last connection time can be deleted from the connection information in the connection table 400. This enables increases in the number of records in the connection table 400 to be suppressed, thereby enabling increases in the storage area used for the storage of the connection table 400 to be suppressed.

### (Second Embodiment)

A communication apparatus 101 according to a second embodiment will now be described. Similar portions to those described in the first embodiment will not again be described.

In the first embodiment 7, a case has been described where the detection operation for the access point APj is controlled by determining in response to a transition from the non-display state to the display state of the display 303, whether a track record of connection to the access point APj in the cell Ci in which the communication apparatus 101 is located is present. In this case, the base station BSi to which the communication apparatus 101 connects may be switched and the cell Ci in which the communication apparatus 101 is located may be changed with the state of the display 303 remaining in the display state.

Thus, in the second embodiment, when the state of the display 303 transitions from the non-display state to the display state, the communication apparatus 101 starts a detection of switching of the base station BSi to which the communication apparatus connects. The communication apparatus 101 then determines in response to switching of the base station BSi to which the communication apparatus connects, whether a track record of connection to the access point APj in the cell Ci in which the communication apparatus is located exists. As a result, the detection operation for the access point APj can be controlled by determining whether there exists a track record of connection to the access point APj when the cell Ci in which the communication apparatus 101 is located changes with the state of the display 303 being the display state.

### (Example of Functional Configuration of Communication Apparatus 101)

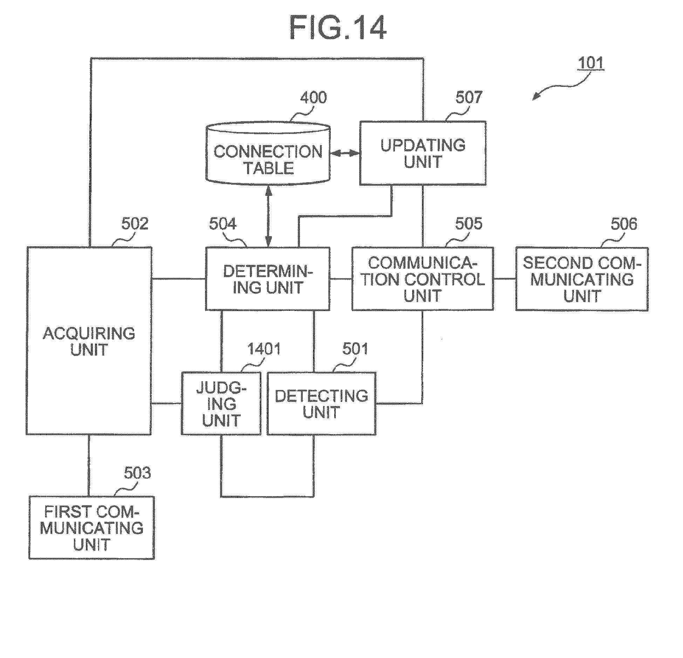

An example of a functional configuration of the communication apparatus 101 according to the second embodiment will be described. FIG. 14 is a block diagram of an example of a functional configuration of the communication apparatus 101 according to the second embodiment. In FIG. 14, the communication apparatus 101 is configured to include the detecting unit 501, the acquiring unit 502, the first communicating unit 503, the determining unit 504, the communication control unit 505, the second communicating unit 506, the updating unit 507, and a judging unit 1401. The detecting unit 501 to the updating unit 507 function as a control unit and are implemented by, for example, causing the CPU 301 to execute a program stored in the memory 302 or by use of hardware such as the public network I/F 305 and the WLAN I/F 306. Processing results obtained by the functional units are stored to the memory 302, for example.

The judging unit 1401 has a function of starting the execution of a judgment process for judging whether the base station BSi to which the communication apparatus connects is switched when the state of the display 303 transitions from the non-display state to the display state. At this time, to continue the communication with the base station of the mobile communication network, the communication apparatus 101 performs a so-called hand-over, i.e., a process for switching the base station BSi to which the communication apparatus connects among the base stations BS1 to BSn.

For example, when the user of the communication apparatus 101 moves, the base station BSi to which the communication apparatus 101 connects may be switched. Even when the user substantially stops, the base station BSi to which the communication apparatus 101 connects may be switched due to a change in the signal strength from the base station of the mobile communication network.

The judging unit 1401 judges whether switching of the base station BSi to which the communication apparatus connects occurs by detecting a hand-over performed with respect to the communication apparatus 101. For example, when the state of the display 303 transitions from the non-display state to the display state, the judging unit 1401 sets a hand-over detection flag to ON. The hand-over flag is a flag indicative of whether to detect for an execution of hand-over in the communication apparatus 101. The hand-over detection flag is stored in, for example, a register of the memory 302 or the CPU 301.

When the hand-over detection flag is set to ON, the judging unit 1401 detects for a hand-over performed in the communication apparatus 101. A hand-over detection method is arbitrary. For example, the judging unit 1401 may detect a hand-over if the cell ID acquired by the acquiring unit 502 is different from the most recently acquired cell ID.

The determining unit 504 has a function of determining whether there exists a track record of connection to the access point APj in the cell Ci in which the communication apparatus is located if the judging unit 1401 judges that a switching of the base station BSi to which the communication apparatus connects has occurred. For example, the determining unit 504 determines whether there exists a track record of connection to the access point APj in the cell Ci in which the communication apparatus is located if a hand-over is detected after the transition from the non-display state to the display state of the display 303.

Hence, the detection operation for the access point APj can be started if there exists a track record of connection to the access point APj when the cell Ci in which the communication apparatus 101 is located changes as a result of switching of the base station BSi to which the communication apparatus 101 connects.

The judging unit 1401 has a function of suspending the execution of a judging process for judging whether the base station BSi to which the communication apparatus connects is switched, if the state of the display 303 transitions from the display state to the non-display state. For example, the judging unit 1401 sets the hand-over detection flag to OFF, if the state of the display 303 transitions from the display state to the non-display state.

This can suspend the hand-over detection function for detecting a hand-over when the state of the display 303 transitions from the display state to the non-display state, thereby preventing the determining process of the determining unit 504 from being executed when the state of the display 303 is the non-display state. This can prevent the power consumption by the communication apparatus 101 for execution of the detection operation for the access point APj when the state of the display 303 is the non-display state.

The communication control unit 505 may suspend the detection operation for the access point APj, if as a result of start of the detection operation for the access point APj, the determining unit 504 determines detection of a hand-over and no track record of connection to the access point APj.

For example, the communication control unit 505 sets the detection operation flag to OFF if as a result of execution of a hand-over with the detection operation flag being set to ON, there exists no track record of connection to the access point APj in the cell Ci in which the communication apparatus is located. This can end the cyclically performed detection operation for the access point APj.

The communication control unit 505 may resume the detection operation for the access point APj if as a result of suspension of the detection operation for the access point APj, a hand-over is detected and the determining unit 504 determines that there exists a track record of connection to the access point APj.

For example, the communication control unit 505 sets the detection operation flag to ON if as a result of execution of a hand-over with the detection operation flag being set to OFF, there exists a track record of connection to the access point APj in the cell Ci in which the communication apparatus is located. This can resume the cyclically performed detection operation for the access point APj.

### (Operation Example of Communication Apparatus 101)

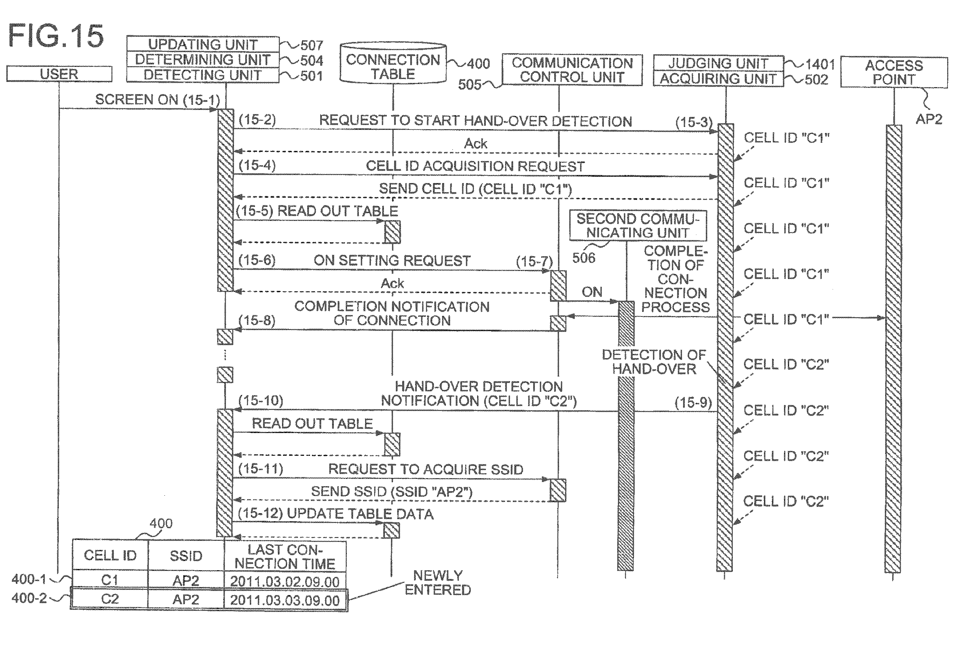

With reference to FIGs. 15 to 21, operation examples of the communication apparatus 101 according to the second embodiment will be described.

FIG. 15 is an explanatory view (1) of an operation example of the communication apparatus 101 according to the second embodiment. The operation example of the communication apparatus 101 depicted in FIG. 15 is an operation example where hand-over to a base station BSi whose cell ID is not in the connection table 400 is detected.

(15-1) The detecting unit 501 detects a transition from the non-display state to the display state of the display 303. In the example of FIG. 15, a transition from the non-display state to the display state of the display 303 is detected as a result of switching from the non-display state to the display state of the display 303 through a user input operation.

(15-2) Upon detecting a transition from the non-display state to the display state of the display 303, the detecting unit 501 sends a hand-over detection start request to the judging unit 1401. In this case, the hand-over detection start request is one requesting the judging unit 1401 to start detecting for a hand-over.

(15-3) Upon receiving the hand-over detection start request, the judging unit 1401 returns an Ack to the detecting unit 501 to set the hand-over detection flag to ON. As a result, the judging unit 1401 starts hand-over detection, i.e., a judging process for judging whether the base station BSi to which the communication apparatus 101 connects is switched.

(15-4) The determining unit 504 requests the acquiring unit 502 to acquire the cell ID of the cell Ci in which the communication apparatus is located and thereby, acquires the cell ID of the cell Ci in which the communication apparatus 101 is located. In the example of FIG. 15, "C1" is acquired as the cell ID of the cell Ci in which the communication apparatus is located.

(15-5) The determining unit 504 refers to the connection table 400 to determine whether there exists a track record of connection to the access point APj in the cell Ci in which the communication apparatus is located. In the example of FIG. 15, the connection record 400-1 corresponding to the acquired cell ID "C1" is already entered and therefore it is determined that there exists a track record of connection to the access point APj.

(15-6) The determining unit 504 sends to the communication control unit 505, an ON setting request for the detection operation flag. At this time, the determining unit 504 may read out a detection operation flag and if the detection operation flag is OFF, send an ON setting request for the detection operation flag to the communication control unit 505.

(15-7) Upon receiving the ON setting request for the detection operation flag, the communication control 505 returns an Ack to the determining unit 504 and if the detection operation flag is OFF, sets the detection operation flag to ON. As a result, the communication control unit 505 controls the communicating units to cyclically perform the detection operation for the access point APj.

(15-8) Upon receiving from the communication control unit 505, completion notification concerning connection to the access point APj, the updating unit 507 updates the contents of the connection table 400. The specific contents of processes of the updating unit 507 are similar to those of the updating unit 507 depicted in FIG. 8 and therefore will not again be described.

(15-9) When the base station BSi to which the communication apparatus connects is switched, the judging unit 1401 sends hand-over detection notification to the updating unit 507. The hand-over detection notification includes the cell ID of the switched base station BSi. In the example of FIG. 15, a hand-over detection notification that includes the cell ID "C2" of the base station BS2 is sent.

(15-10) Upon receiving the hand-over detection notification, the updating unit 507 reads out connection information from the connection table 400. The order of processes (15-10) and (15-11) is arbitrary.

(15-11) The updating unit 507 requests the communication control unit 505 to acquire the SSID of the access point APj the connection to which is completed and thereby, acquires the SSID of the access point APj currently connected. In the example of FIG. 15, "AP2" is acquired as the SSID of the access point AP2 currently connected.

(15-12) The updating unit 507 updates the contents of the connection table 400. In the example of FIG. 15, connection information corresponding to the cell ID "C2" of the base station BS2 is not entered and hence, a connection record 400-2 that corresponds to the cell ID "C2" of the base station BS2 is newly entered.

In this manner, according to the communication apparatus 101, when a hand-over to a base station BSi whose cell ID is not in the connection table 400 has been detected, connection information corresponding to the cell ID of the base station BSi can be newly entered.

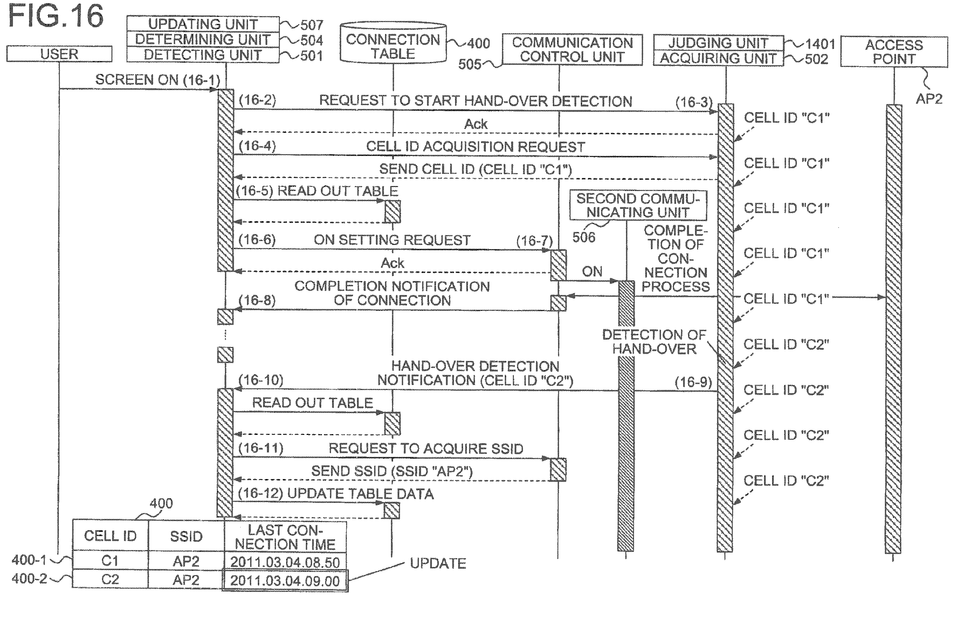

FIG. 16 is an explanatory view (2) of an operation example of the communication apparatus 101 according to the second embodiment. The operation example of the communication apparatus 101 depicted in FIG. 16 is an operation example in the case of detection of hand-over to a base station BSi whose cell ID is in the connection table 400.

Operations of (16-1) to (16-11) depicted in FIG. 16 are similar to those of (15-1) to (15-11) depicted in FIG. 15 and therefore will not again be described.

(16-12) The updating unit 507 updates the contents of the connection table 400. In the example of FIG. 16, the connection record 400-2 is already entered that corresponds to a combination of the cell ID "C2" of the base station BS2 in which the communication apparatus 101 is located and the SSID "AP2" of the access point AP2 currently connected,

For this reason, the updating unit 507 updates the last connection time of the connection record 400-2. For example, "2011.03.04.09.00" indicating the time of connection of the communication apparatus 101 to the access point AP2 is overwritten into the last connection time field of the connection record 400-2.

In this manner, according to the communication apparatus 101, when a hand-over to a base station BSi whose cell ID is already in the connection table 400 has been detected, connection information can be updated that corresponds to the cell ID of the base station BSi.

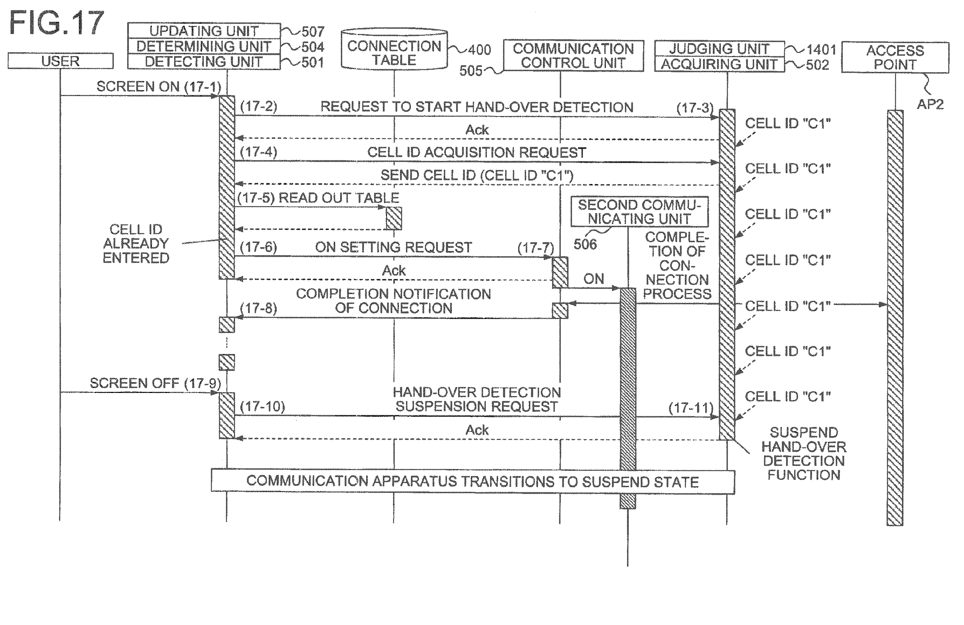

FIG. 17 is an explanatory view (3) of an operation example of the communication apparatus 101 according to the second embodiment. The operation example of the communication apparatus 101 depicted in FIG. 17 is an operation example where the hand-over detection function is suspended when the state of the display 303 transitions from the display state to the non-display state.

Operations of (17-1) to (17-8) depicted in FIG. 17 are similar to those of (15-1) to (15-8) depicted in FIG. 15 and therefore will not again be described.

(17-9) The detecting unit 501 detects a transition from the display state to the non-display state of the display 303. In the example of FIG. 17, the transition from the display state to the non-display state of the display 303 is detected as a result of switching from the display state to the non-display state of the display 303 through a user input operation.

(17-10) Upon detecting the transition from the display state to the non-display state of the display 303, the detecting unit 501 sends a hand-over detection suspend request to the judging unit 1401. The hand-over detection suspend request requests a suspension of execution of a judging process for judging whether a hand-over is performed in the communication apparatus 101.

Upon receiving the hand-over detection suspend request, the judging unit 1401 returns an Ack to the detecting unit 501 to set the hand-over detection flag to OFF. As a result, the judging unit 1401 suspends the hand-over detection, i.e., the execution of the judging process for judging whether the base station BSi to which the communication apparatus 101 connects is switched.

In this manner, according to the communication apparatus 101, the hand-over detection function can be suspended in response to a transition from the display state to the non-display state of the display 303.

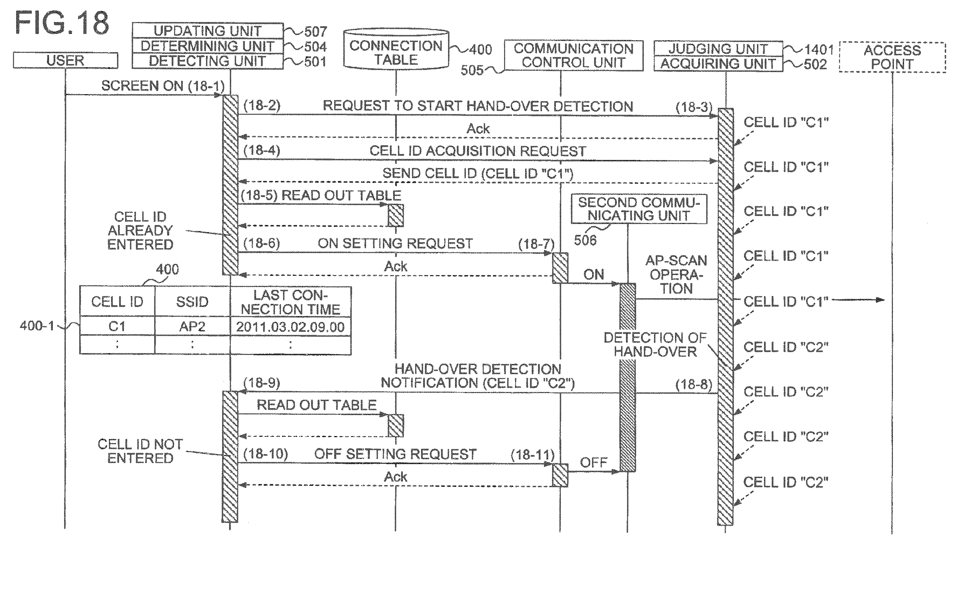

FIG. 18 is an explanatory view (4) of an operation example of the communication apparatus 101 according to the second embodiment. The operation example of the communication apparatus 101 depicted in FIG. 18 is an operation example where in a case of no connection to the access point APj, hand-over to a base station BSi whose cell ID is not in the connection table 400 is detected.

Operations of (18-1) to (18-7) depicted in FIG. 18 are similar to those of (15-1) to (15-7) depicted in FIG. 15 and therefore will not again be described.

(18-8) When the base station BSi to which the communication apparatus connects is switched, the judging unit 1401 sends hand-over detection notification to the determining unit 504. In the example of FIG. 18, hand-over detection notification is sent that includes the cell ID "C2" of the base station BS2.

(18-9) The determining unit 504 refers to the connection table 400 to determine whether there exists a track record of connection to the access point APj in the cell Ci in which the communication apparatus is located. In the example of FIG. 18, connection information corresponding to the acquired cell ID "C2" is not entered and hence, it is determined that no track record of connection to the access point APj is present.

(18-10) The determining unit 504 sends to the communication control unit 505, an OFF setting request for the detection operation flag. At this time, the determining unit 504 may read out the detection operation flag and if the detection operation flag is ON, send an OFF setting request for the detection operation flag to the communication control unit 505.

(18-11) Upon receiving the OFF setting request for the detection operation, the communication control unit 505 returns an Ack to the determining unit 504 and if the detection operation flag is ON, sets the detection operation flag to OFF. As a result, the communication control unit 505 suspends the detection operation for the access point APj.

In this manner, according to the communication apparatus 101, the detection operation for the access point APj can be suspended if no track record of connection to the access point APj in the cell Ci in which the communication apparatus 101 is located, is present.

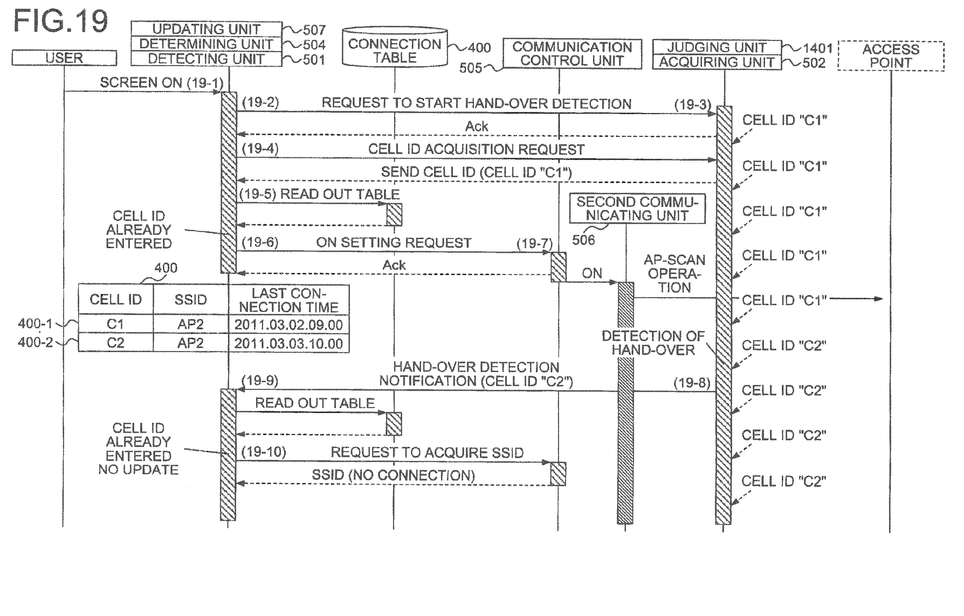

FIG. 19 is an explanatory view (5) of an operation example of the communication apparatus 101 according to the second embodiment. The operation example of the communication apparatus 101 depicted in FIG. 19 is an operation example where in the case of no connection to the access point APj, hand-over to a base station BSi whose cell ID is in the connection table 400 is detected.

Operations of (19-1) to (19-7) depicted in FIG. 19 are similar to those of (15-1) to (15-7) depicted in FIG. 15 and therefore will not again be described.

(19-8) When the base station BSi to which the communication apparatus connects is switched, the judging unit 1401 sends hand-over detection notification to the determining unit 504. In the example of FIG. 19, a hand-over detection notification that includes the cell ID "C2" of the base station BS2 is sent.

(19-9) The determining unit 504 refers to the connection table 400 to determine whether there exists a track record of connection to the access point APj in the cell Ci in which the communication apparatus is located. In the example of FIG. 19, the connection record 400-2 corresponding to the acquired cell ID "C2" is already entered and therefore, it is determined that a track record of connection to the access point APj is present.

(19-10) The updating unit 507 sends to the communication control unit 505, a send request for the SSID of the access point APj currently connected. In the example of FIG. 19, no response of the SSID is sent consequent to lack of connection to the access point APj. In this case, the updating unit 507 does not update the contents of the connection table 400.

In this manner, even when hand-over to a base station BSi whose cell ID is in the connection table 400 is detected, the communication apparatus 101 does not update the contents of the connection table 400 if there is no connection to the access point APj.

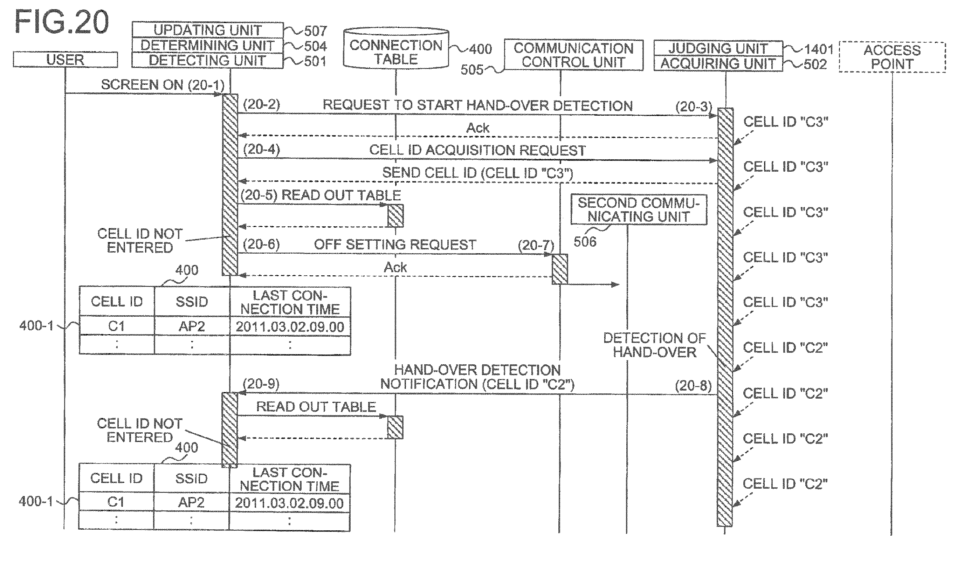

FIG. 20 is an explanatory view (6) of an operation example of the communication apparatus 101 according to the second embodiment. In the operation example of the communication apparatus 101 depicted in FIG. 20, while the detection operation flag is OFF, hand-over to a base station BSi whose cell ID is not in the connection table 400 is detected.

Operations of (20-1) to (20-3) depicted in FIG. 20 are similar to those of (15-1) to (15-3) depicted in FIG. 15 and therefore will not again be described.

(20-4) The determining unit 504 requests the acquiring unit 502 to acquire the cell ID of the cell Ci in which the communication apparatus is located and thereby, acquires the cell ID of the cell Ci in which the communication apparatus is located. In the example of FIG. 20, "C3" is acquired as the cell ID of the cell Ci in which the communication apparatus is located.

(20-5) The determining unit 504 refers to the connection table 400 to determine whether there exists a track record of connection to the access point APj in the cell Ci in which the communication apparatus is located. In the example of FIG. 20, connection information corresponding to the acquired cell ID "C3" is not entered and hence, it is determined that no track record of connection to the access point APj is present.

(20-6) The determining unit 504 sends to the communication control unit 505, an OFF setting request for the detection operation flag.

(20-7) Upon receiving the OFF setting request for the detection operation flag, the communication control unit 505 returns an Ack to the determining unit 504 and if the detection operation flag is ON, sets the detection operation flag to OFF. As a result, the communication control unit 505 suspends the detection operation for the access point APj.

(20-8) When the base station BSi to which the communication apparatus connects is switched, the judging unit 1401 sends a hand-over detection notification to the determining unit 504. In the example of FIG. 20, hand-over detection notification including the cell ID "C2" of the base station BS2 is sent.

(20-9) Upon receiving the hand-over detection notification, the determining unit 504 refers to the connection table 400 to determine whether there exists a track record of connection to the access point APj in the cell Ci in which the communication apparatus is located. In the example of FIG. 20, connection information corresponding to the acquired cell ID "C2" is not entered and hence, it is determined that no track record of connection to the access point APj is present. In this case, the updating unit 507 does not update the contents of the connection table 400.

In this manner, when the detection operation flag is OFF, the communication apparatus 101 does not update the contents of the connection table 400 if hand-over is detected to a base station BSi whose cell ID is not in the connection table 400.

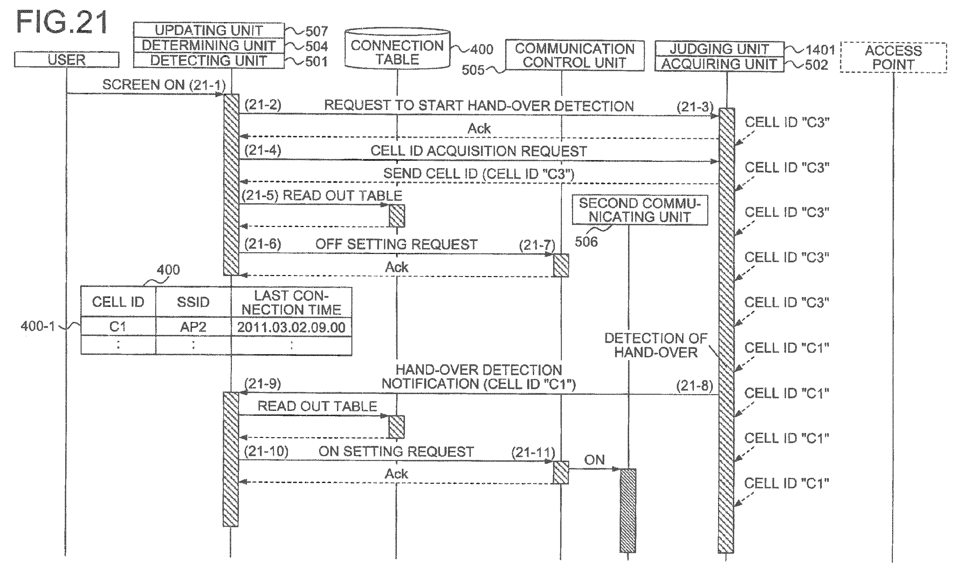

FIG. 21 is an explanatory view (7) of an operation example of the communication apparatus 101 according to the second embodiment. In the operation example of the communication apparatus 101 depicted in FIG. 21, while the detection operation flag is OFF, hand-over to a base station BSi whose cell ID is in the connection table 400 is detected.

Operations of (21-1) to (21-3) depicted in FIG. 21 are similar to those of (15-1) to (15-3) depicted in FIG. 15 and therefore will not again be described.

(21-4)The determining unit 504 requests the acquiring unit 502 to acquire a cell ID of the cell Ci in which the communication apparatus is located, to acquire the cell ID of the cell Ci in which the communication apparatus is located. In the example of FIG. 21, "C3" is acquired as the cell ID of the cell Ci in which the communication apparatus is located.

(21-5)The determining unit 504 refers to the connection table 400 to determine whether there exists a track record of connection to the access point APj in the cell Ci in which the communication apparatus is located. In the example of FIG. 21, connection information corresponding to the acquired cell ID "C3" is not entered and hence, it is determined that no track record of connection to the access point APj is present.

(21-6) The determining unit 504 sends to the communication control unit 505, an OFF setting request for the detection operation flag.

(21-7) Upon receiving the detection operation flag OFF setting request, the communication control unit 505 returns an Ack to the determining unit 504 and, if the detection operation flag is ON, sets the detection operation flag to OFF. As a result of this, the communication control unit 505 stops the detection operation for the access point APj.

(21-8) When the base station BSi to which the communication apparatus connects is switched, the judging unit 1401 sends a hand-over detection notification to the determining unit 504. In the example of FIG. 21, sent is a hand-over detection notification containing the cell ID "C1" of the base station BS2.

(21-9) Upon receiving the hand-over detection notification, the determining unit 504 refers to the connection table 400 to determine whether there exists a track record of connection to the access point APj in the cell Ci in which the communication apparatus is located. In the example of FIG. 21, the connection record 400-1 corresponding to the acquired cell ID "C1" is already entered and hence it is determined that the track record of connection to the access point APj is present.

(21-10) The determining unit 504 sends to the communication control unit 505, an ON setting request for the detection operation flag.

(21-11) Upon receiving the detection operation flag ON setting request, the communication control unit 505 returns an Ack to the determining unit 504 and, if the detection operation flag is OFF, sets the detection operation flag to ON. As a result, the communication control unit 505 controls the communicating units so that the detection operation for the access point APj is cyclically performed.

In this manner, according to the communication apparatus 101, the detection operation for the access point APj can be started if there exists a track record of connection to the access point APj in the cell Ci in which the communication apparatus 101 is located when a hand-over is detected.

### (Various Process Procedures of Communication Apparatus 101)

Various process procedures of the communication apparatus 101 according to the second embodiment will then be described. A determination process procedure of the communication apparatus 101 will first be described in which it is determined whether a track record of connection to the access point APj is present in the cell Ci in which the communication apparatus 101 is located.

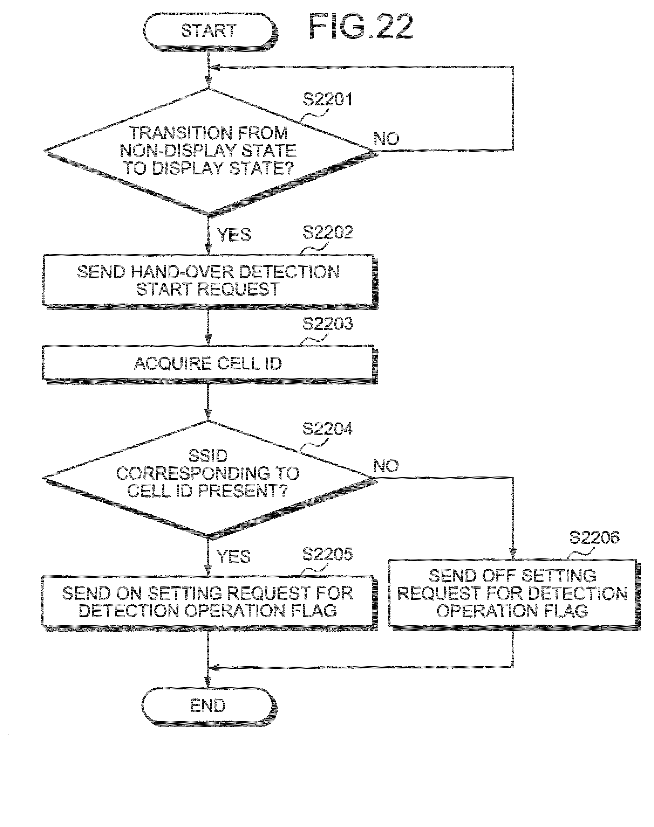

FIG. 22 is a flowchart of an example of the determination process procedure of the communication apparatus 101 according to the second embodiment. In the flowchart of FIG. 22, first, the detecting unit 501 determines whether the state of the display 303 transitions from the non-display state to the display state (step S2201).

The detecting unit 501 waits for a transition from the non-display state to the display state of the display 303 (step S2201: NO). If the detecting unit 501 determines that the state of the display 303 transitions from the non-display state to the display state (step S2201: YES), the detecting unit 501 sends a hand-over detection start request to the judging unit 1401 (step S2202).

Next, the determining unit 504 acquires from the acquiring unit 502 the cell ID of the cell Ci in which the communication apparatus is located (step S2203). The determining unit 504 then refers to the connection table 400 to determine whether there exists an SSID of the access point APj that is stored corresponding to the acquired cell ID (step S2204).

If the SSID is present (step S2204: YES), the determining unit 504 sends to the communication control unit 505, an ON setting request for the detection operation flag (step S2205), and ends the series of processes according to this flowchart. On the other hand, if the SSID is not present (step S2204: NO), the determining unit 504 sends to the communication control unit 505, an OFF setting request for the detection operation flag (step S2206), and ends the series of processes according to this flowchart.

This enables a hand-over detection to be started in response to a transition from the non-display state to the display state of the display 303. The communication control unit 505 can be notified of the detection operation flag ON/OFF setting request depending on the track record of connection to the access point APj in the cell Ci in which the communication apparatus 101 is located.

A setting process procedure of the communication apparatus 101 for setting the hand-over detection flag will then be described.

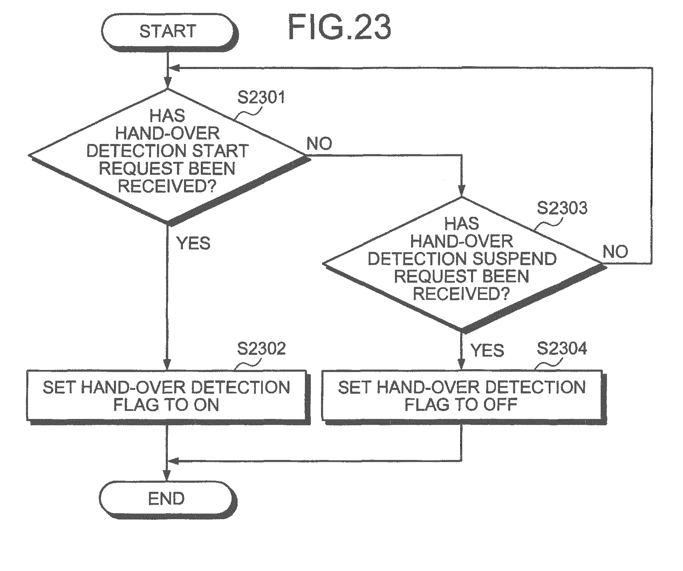

FIG. 23 is a flowchart of an example of the setting process procedure of the communication apparatus 101 according to the second embodiment. In the flowchart of FIG. 23, first, the judging unit 1401 judges whether a hand-over detection start request is received from the detecting unit 501 (step S2301).

If the hand-over detection start request is received (step S2301: YES), the judging unit 1401 sets the hand-over detection flag to ON (step S2302), and ends the series of processes according to this flowchart.

If the hand-over detection start request is not received at step S2301 (step S2301: NO), the judging unit 1401 judges whether a hand-over detection suspend request has been received from the detecting unit 501 (step S2303). The hand-over detection suspend request is sent from the detecting unit 501 to the judging unit 1401 when the state of the display 303 transitions from the display state to the non-display state.

If the hand-over detection suspend request is not received (step S2303: NO), the judging unit 1401 returns to step S2301. On the other hand, if the hand-over detection suspend request is received (step S2303: YES), the judging unit 1401 sets the hand-over detection flag to OFF (step S2304), and ends the series of processes according to this flowchart.

This enables the hand-over detection function to be controlled depending on the transition of the state of the display 303.

An update process procedure of the communication apparatus 101 will next be described that updates the contents of the connection table 400 depicted in FIG. 4.

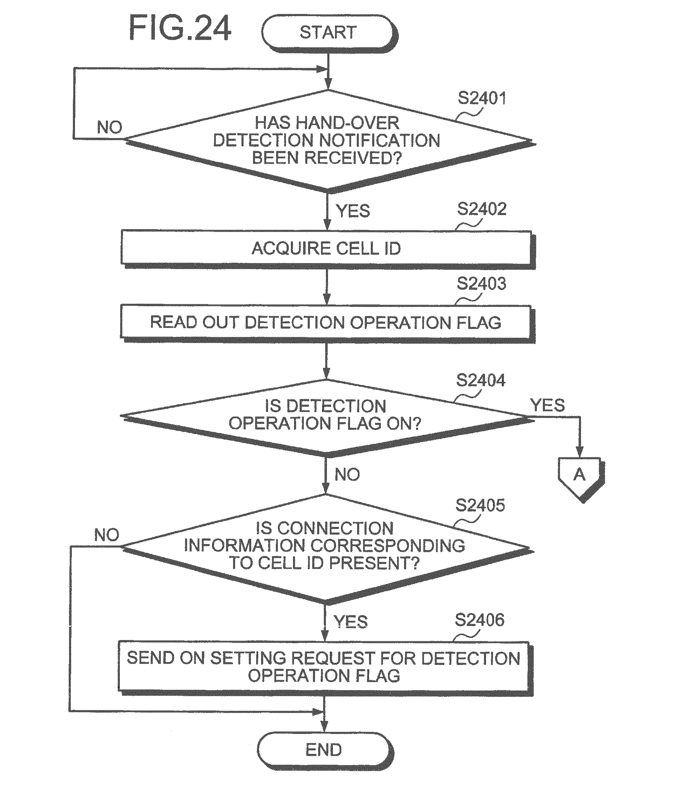

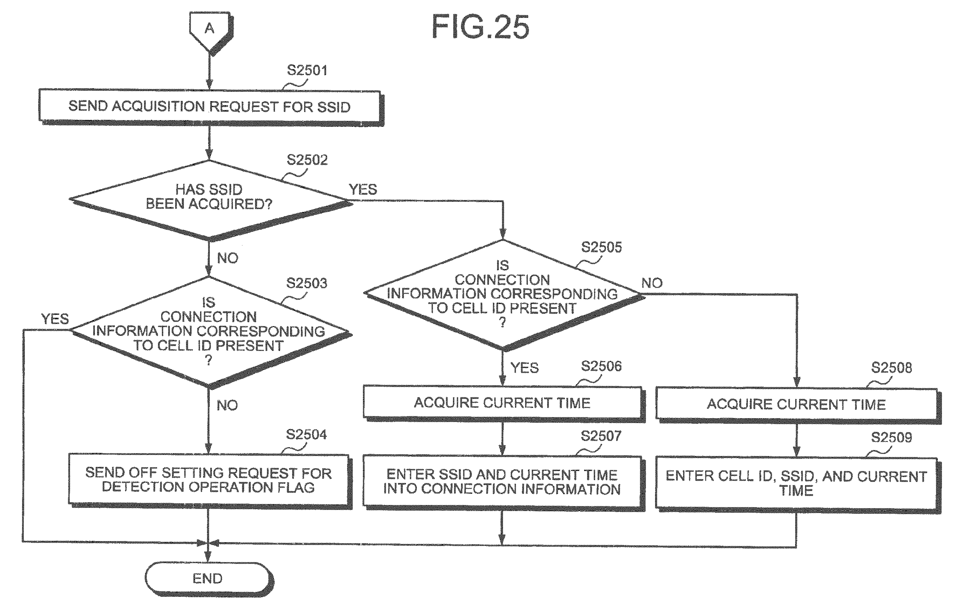

FIGs. 24 and 25 are flowcharts of an example of the update process procedure of the communication apparatus 101 according to the second embodiment. In the flowchart of FIG. 24, first, the updating unit 507 judges whether a hand-over detection notification has been received from the judging unit 1401 (step S2401). The hand-over detection notification is sent from the judging unit 1401 to the updating unit 507 when the base station BSi to which the communication apparatus connects is switched.

The updating unit 507 waits for a reception of the hand-over detection notification (step S2401: NO). When the updating unit 507 receives a hand-over detection notification (step S2401: YES), the updating unit 507 acquires from the acquiring unit 502 a cell ID of the cell Ci in which the communication apparatus is located (step S2402).

The updating unit 507 reads out a detection operation flag (step S2403) to judge whether the detection operation flag is set to ON (step S2404). If the detection operation flag is set to OFF (step S2404: NO), the determining unit 504 refers to the connection table 400 to determine whether connection information corresponding to the acquired cell ID is present (step S2405).

If the connection information corresponding to the cell ID is present (step S2405: YES), the determining unit 504 sends to the communication control unit 505, an ON setting request for the detection operation flag (step S2406), and ends the series of processes according to this flowchart. On the other hand, if the connection information corresponding to the cell ID is not present (step S2405: NO), the determining unit 504 terminates the series of processes according to this flowchart.

If the detection operation flag is set to ON at step S2404 (step S2404: YES), the updating unit 507 transitions to step S2501 depicted in FIG. 25.

In the flowchart depicted in FIG. 25, first, the updating unit 507 sends to the communication control unit 505, an acquisition request for the SSID of the access point APj currently connected (step S2501). The updating unit then judges whether the SSID of the access point APj currently connected has been acquired from the communication control unit 505 (step S2502).

If the SSID has not been acquired due to no-connection to the access point AP (step S2502: NO), the determining unit 504 refers to the connection table 400 and determines whether connection information corresponding to the acquired cell ID is present (step S2503).

If no connection information corresponding to the cell ID is present (step S2503: NO), the determining unit 504 sends to the communication control unit 505, an OFF setting request for the detection operation flag (step S2504), and terminates the series of processes according to this flowchart. On the other hand, if the connection information corresponding to the cell ID is present (step S2503: YES), the determining unit 504 ends the series of processes according to this flowchart.

If the SSID is acquired at step S2502 (step S2502: YES), the updating unit 507 refers to the connection table 400 and determines whether connection information corresponding to the acquired cell ID is present (step S2505).

If connection information is present (step S2505: YES), the updating unit 507 acquires the current time (step S2506). The updating unit 507 enters the acquired SSID and the current time into the SSID field and the last connection time field of the connection information corresponding to the acquired cell ID (step S2507), and terminates the series of processes according to this flowchart.

If no connection information is present at step S2505 (step S2505: NO), the updating unit 507 acquires the current time (step S2508). The updating unit 507 enters the acquired cell ID, the SSID, and the current time into the respective fields in the connection table 400 (step S2509), and terminates the series of processes according to this flowchart. As a result, new connection information is entered as a record in the connection table 400.

This enables the contents of the connection table 400 to be updated depending on the status of connection to the access point APj when hand-over is performed.

The communication control process procedure of the communication apparatus 101 for controlling the detection operation for the access point APj is similar to the communication control process procedure (see FIG. 12) of the communication apparatus 101 described in the first embodiment and therefore will not again be described. The update process procedure of the communication apparatus 101 upon the completion of connection to the access point APj is similar to the update process procedure of the communication apparatus 101 described in the first embodiment and therefore will not again be described.

As described above, according to the communication apparatus 101 of the second embodiment, the detection of hand-over performed by the communication apparatus can be started if the state of the display 303 transitions from the non-display state to the display state. According to the communication apparatus 101, if hand-over is detected, it can be determined whether a track record of connection to the access point APj in the cell Ci in which the communication apparatus is located is present.

This enables the detection operation for the access point APj to be started if a track record of connection to the access point APj is present when the cell Ci in which the communication apparatus 101 is located is changed as a result of switching of the base station BSi to which the communication apparatus 101 connects. That is, even though the cell Ci in which the communication apparatus 101 is located is changed while the state of the display 303 remains in the display state, the detection operation can be started depending on the track record of connection to the access point APj, thereby making it possible to prevent usability from being impaired.

According to the communication apparatus 101, the detection of hand-over performed by the communication apparatus can be suspended if the state of the display 303 transitions from the display state to the non-display state. This can prevent power consumption by the communication apparatus 101 for execution of the detection operation for the access point APj when the state of the display 303 is the non-display state.

According to the communication apparatus 101, the detection operation for the access point APj can be suspended if, as a result of starting the detection operation for the access point APj, hand-over is detected and if it is determined that a track record of connection to the access point APj is not present. This enables the cyclically performed detection operation for the access point APj to be suspended if the cell Ci in which the communication apparatus 101 is located changes to a cell having no track record of connection to the access point APj as a result of execution of the hand-over.

According to the communication apparatus 101, the detection operation for the access point APj can be resumed if, as a result of suspending the detection operation for the access point APj, hand-over is detected and if it is determined that a track record of connection to the access point APj is present. This enables the cyclically performed detection operation for the access point APj to be resumed if the cell Ci in which the communication apparatus 101 is located changes to a cell having a track record of connection to the access point APj as a result of execution of the hand-over.

### (Third Embodiment)

A communication apparatus 101 according to a third embodiment will be described. Similar portions to those described in the first and second embodiments will not again be described.

A storage area used to store the connection table 400 increases as the number of records in the connection table 400 increases. In a case where the access point APj to which the communication apparatus 101 connects is portable or equipped on a train and/or bus, frequent hand-over is performed accompanying the movement of the train and/or the bus, which may result in a sharp increase in the number of records in the connection table 400.

Thus, in the third embodiment, an updating method will be described that suppresses increases in the number of records in the connection table 400 and that suppresses increases of the storage area used for the storage of the connection table 400. Examples of a first updating method and a second updating method of the connection table 400 according to the third embodiment will hereinafter be described.

### (First Updating Method)

An example of the first updating method will be described. In the first updating method, ESSID is used as identification information for identifying an access point APj of the wireless LAN.

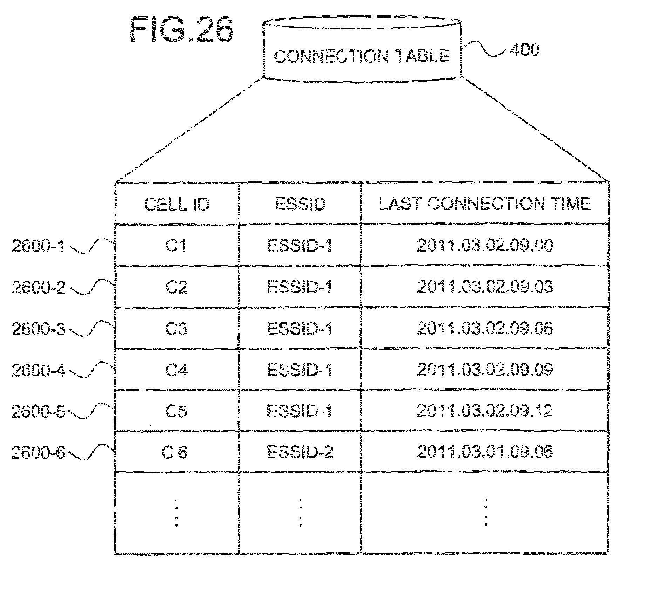

FIG. 26 is an explanatory view (2) of an example of the contents of the connection table 400. In FIG. 26, the connection table 400 has fields for cell IDs, ESSIDs, and last connection times. By entering information into each of the fields, connection information is stored as records (e.g., connection records 2600-1 to 2600-6).

The ESSID is identification information for identifying the access point APj of the wireless LAN. The same ESSID may be imparted to a specific access point group among access points AP1 to APm. An example of a specific access point group is a set of access points having the same available communication services or a set of access points provided respectively at stores managed by a company.

An example of the contents of specific processes of the updating unit 507 will be described in a case where connection information is newly entered into the connection table 400 depicted in FIG. 26 as a result of completion of connection to the access point APj. An example will be described in which connection information including the cell ID "C6", the ESSID "ESSID-1", and the last connection time "2011.03.02.09.15" is newly entered.

In this case, first, the updating unit 507 retrieves from the connection table 400, connection information having in the ESSID field, the same ESSID as the ESSID "ESSID-1" of the connection information to be newly entered. In the example of FIG. 26, connection records 2600-1 to 2600-5 having "ESSID-1" in the ESSID field are retrieved.

The updating unit 507 then calculates the number N of retrieved connection records. In the example of FIG. 26, the number N of retrieved connection records is "N=5". The updating unit 507 judges whether the calculated number N is at least a threshold value Nₘₐₓ. The threshold value Nₘₐₓ represents an upper limit value of the number of connection records that can be entered into the connection table 400 for the same ESSID. The threshold value Nₘₐₓ can be arbitrarily set and, for example, stored in the preset memory 302. In this case, the threshold value Nₘₐₓ is "Nₘₐₓ=5".

If the number N is less than the threshold value Nₘₐₓ, the updating unit 507 enters new connection information into the connection table 400. On the other hand, if the number N is not less than the threshold value Nₘₐₓ, the updating unit 507 deletes connection information having the oldest last connection time from the retrieved connection information in the connection table 400. The updating unit 507 then enters new connection information into the connection table 400.

In the example of FIG. 26, the number N is not less than the threshold value Nₘₐₓ. Hence, the updating unit 507 deletes from the connection table 400, the connection record 2600-1 having the oldest last connection time among the retrieved connection records 2600-1 to 2600-5. The updating unit 507 then enters new connection information into the connection table 400.

In this manner, according to the first updating method, an increase in the number of records in the connection table 400 can be suppressed by setting an upper limit on the total number N of connection records that can be entered into the connection table 400 for the same ESSID.

### (First Updating Method: Update Process Procedure of Communication Apparatus 101)

An update process procedure of the communication apparatus 101 according to the first updating method will be described. The update process procedure of the communication apparatus 101 will be described in the case of completion of connection to the access point APj.

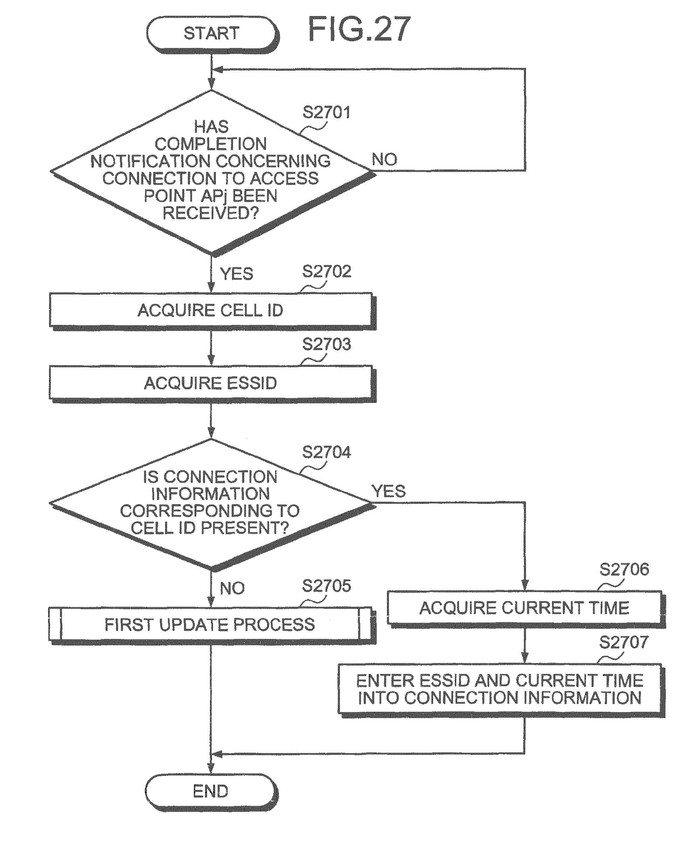

FIG. 27 is a flowchart of an example of the update process procedure of the communication apparatus 101 according to the first updating method when connection to the access point APj is completed. In the flowchart of FIG. 27, the updating unit 507 judges whether completion notification of connection to the access point APj has been received from the communication control unit 505 (step S2701).

The updating unit 507 waits for reception of completion notification of connection to the access point APj (step S2701: NO). Upon receiving connection completion notification (step S2701: YES), the updating unit 507 acquires from the acquiring unit 502, the cell ID of the cell Ci in which the communication apparatus is located (step S2702).

The updating unit 507 acquires from the communication control unit 505, the ESSID of the access point APj to which connection has been completed (step S2703). The updating unit 507 refers to the connection table 400 to judge whether connection information corresponding to the acquired cell ID is present (step S2704).

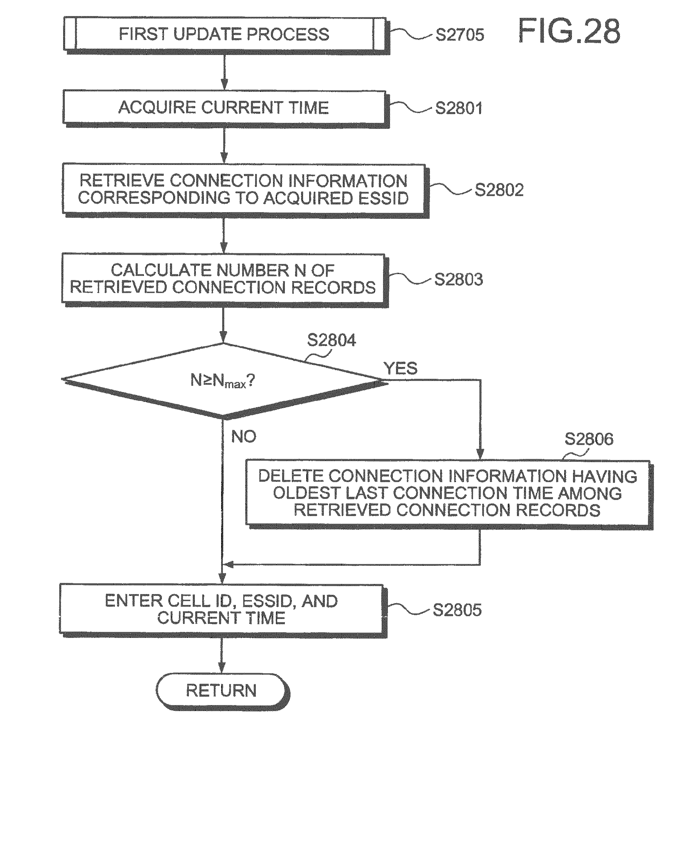

If no connection information is present (step S2704: NO), the updating unit 507 executes a first update process (step S2705), and terminates the series of processes according to this flowchart. A specific process procedure of the first update process will be described later with reference to FIG. 28.

If connection information is present at step S2704 (step S2704: YES), the updating unit 507 acquires the current time (step S2706). The updating unit 507 enters the acquired ESSID and the current time into the ESSID field and the last connection time field of the connection information corresponding to the acquired cell ID (step S2707), and terminates the series of processes according to this flowchart.

FIG. 28 is a flowchart of an example of a specific process procedure of the first update process. In the flowchart of FIG. 28, the updating unit 507 acquires the current time (step S2801).

The updating unit 507 retrieves from the connection table 400, connection information corresponding to the ESSID acquired at step S2703 depicted in FIG. 27 (step S2802). The updating unit 507 calculates the number N of retrieved connection records (step S2803).

The updating unit 507 judges whether the calculated number N is at least the threshold value Nₘₐₓ (step S2804). If the number N is less than the threshold value Nₘₐₓ (step S2804: NO), the updating unit 507 enters the acquired cell ID, ESSID, and the current time into the fields in the connection table 400 (step S2805), terminates the series of processes according to this flowchart, and returns to the step invoking the first update process. As a result, new connection information is entered as a record into the connection table 400.

On the other hand, if the number N is at least the threshold value Nₘₐₓ (step S2804: YES), the updating unit 507 deletes from the connection table 400, the connection record having the oldest last connection time among the retrieved connection records (step S2806), and transitions to step 2805.

An update process procedure of the communication apparatus 101 will be described in a case of detection of hand-over.

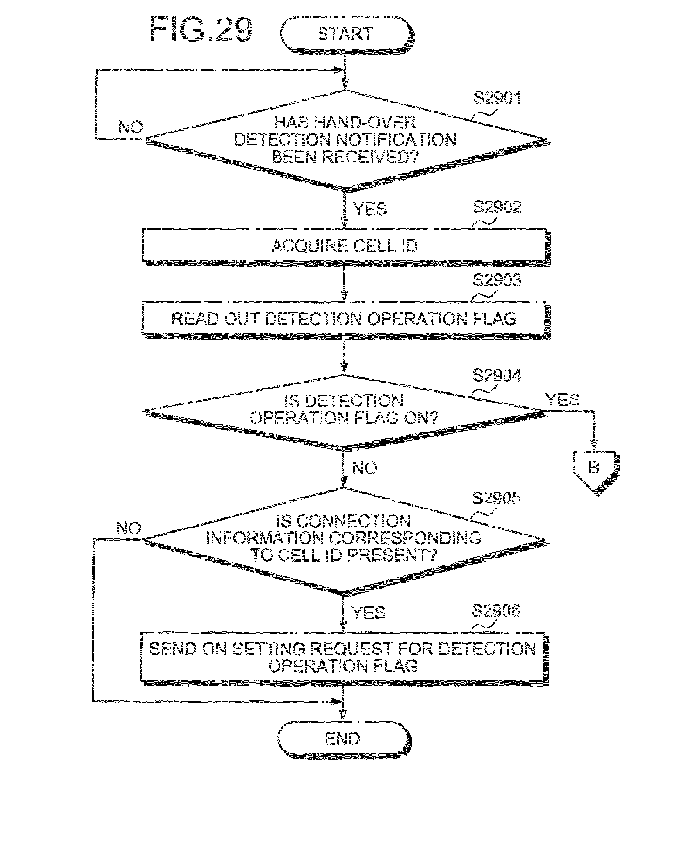

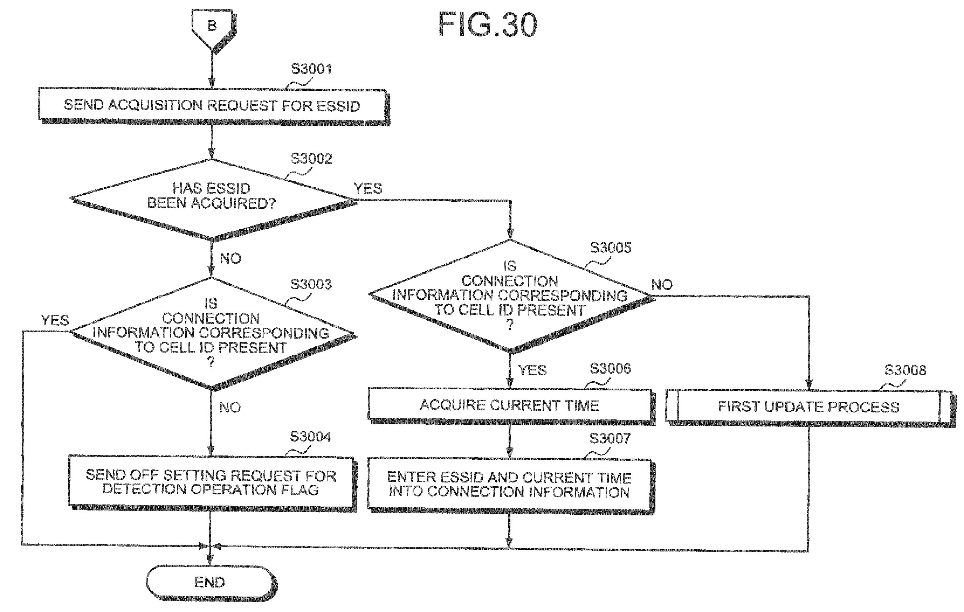

FIGs. 29 and 30 are flowcharts of an example of the update process procedure of the communication apparatus 101 according to the first updating method when hand-over is detected. In the flowchart of FIG. 29, the updating unit 507 judges whether hand-over detection notification has been received from the judging unit 1401 (step S2901).

The updating unit 507 waits for reception of hand-over detection notification (step S2901: NO). Upon receiving hand-over detection notification (step S2901: YES), the updating unit 507 acquires from the acquiring unit 502, the cell ID of the cell Ci in which the communication apparatus is located (step S2902).

The updating unit 507 reads out a detection operation flag (step S2903) and determines whether the detection operation flag is set to ON (step S2904). If the detection operation flag is set to OFF (step S2904: NO), the determining unit 504 refers to the connection table 400 and determines whether connection information corresponding to the acquired cell ID is present (step S2905).

If connection information corresponding to the cell ID is present (step S2905: YES), the determining unit 504 sends to the communication control unit 505, an ON setting request for the detection operation flag (step S2906), and terminates the series of processes according to this flowchart. On the other hand, if no connection information corresponding to the cell ID is present (step S2905: NO), the determining unit 504 ends the series of processes of according to the flowchart.

If the detection operation flag is set to ON at step S2904 (step S2904: YES), the updating unit 507 transitions to step S3001 depicted in FIG. 30.

In the flowchart depicted in FIG. 30, the updating unit 507 sends to the communication control unit 505, an acquisition request for the ESSID of the access point APj currently connected (step S3001). The updating unit 507 judges whether the ESSID of the access point APj currently connected has been acquired from the communication control unit 505 (step S3002).

If the ESSID has not been acquired due to no-connection to the access point APj (step S3002: NO), the determining unit 504 refers to the connection table 400 and determines whether connection information corresponding to the acquired cell ID is present (step S3003).

If no connection information corresponding to the cell ID is present (step S3003: NO), the determining unit 504 sends to the communication control unit 505, an OFF setting request for the detection operation flag (step S3004), and terminates the series of processes according to this flowchart. On the other hand, if connection information corresponding to the cell ID is present (step S3003: YES), the determining unit 504 ends the series of processes according to this flowchart.

If the ESSID is acquired at step S3002 (step S3002: YES), the updating unit 507 refers to the connection table 400 and determines whether connection information corresponding to the acquired cell ID is present (step S3005).

If connection information is present (step S3005: YES), the updating unit 507 acquires the current time (step S3006). The updating unit 507 enters the acquired ESSID and the current time into the ESSID field and the last connection time field of the connection information corresponding to the acquired cell ID (step S3007), and terminates the series of processes according to this flowchart.

If no connection information is present at step S3005 (S3005: NO), the updating unit 507 executes the first update process (step S3008), and terminates the series of processes according to this flowchart. As a result, new connection information is entered as a record into the connection table 400.

The specific process procedure of the first update process executed at step S3008 is similar to the specific process procedure of the first update process depicted in FIG. 28 and therefore will not again be described.

According to the first updating method described above, an upper limit can be set for the total number N of connection records that can be entered into the connection table for the same ESSID. As a result, according to the first updating method, increases in the number of records in the connection table 400 can be suppressed together with increases in the storage area used to store the connection table 400.

### (Second Updating Method)

An example of a second updating method will be described. In the second updating method, a combination of the ESSID and the BSSID is used as identification information for identifying the access point APj of the wireless LAN.

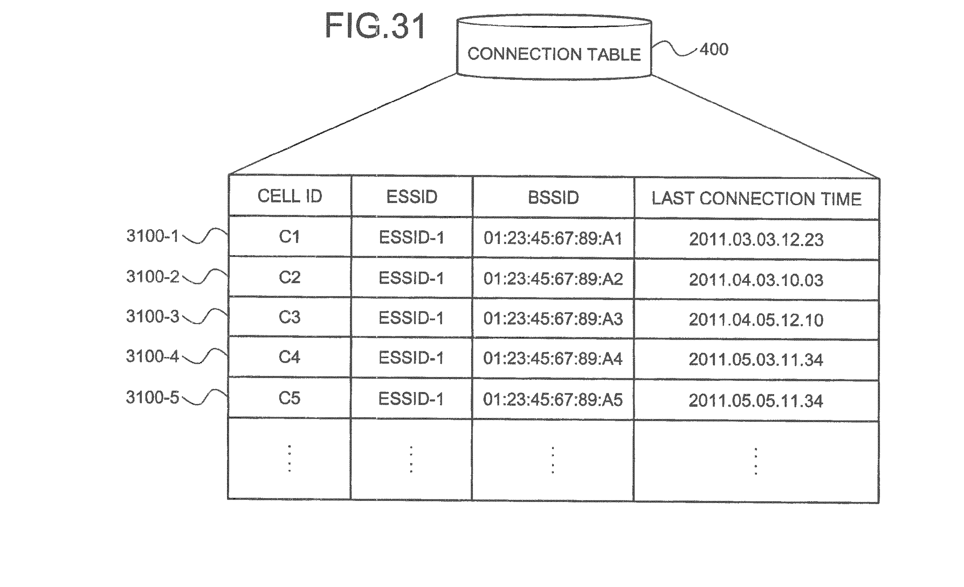

FIG. 31 is an explanatory view (3) of an example of the contents of the connection table 400. In FIG. 31, the connection table 400 has fields for cell IDs, ESSIDs, BSSIDs, and last connection times. By entering information into the fields connection information is stored as records (e.g., connection records 3100-1 to 3100-5).

The BSSID is identification information for uniquely identifying the access point APj of the wireless LAN. The BSSID is for example a media access control (MAC) address of the access point APj.

An example of the contents of a specific process of the updating unit 507 will be described for a case where connection information is newly entered into the connection table 400 depicted in FIG. 31 as a result of completion of connection to the access point APj. An example will be described in which connection information including the cell ID "C6", the ESSID "ESSID-1", the BSSID "01:23:45:67:89:A6" and the last connection time "2011.05.07.11.34" is newly entered.

In this case, the updating unit 507 retrieves from the connection table 400, connection information having in the ESSID field, the same ESSID as the ESSID "ESSID-1" of the connection information to be newly entered and having in the BSSID field, the same BSSID as the BSSID "01:23:45:67:89:A6" of the connection information to be newly entered.

In other words, the updating unit 507 retrieves from the connection table 400, connection information having the same combination of the ESSID and the BSSID as that of the connection information to be newly entered. In the example of FIG. 31, since no connection information is present that has the same combination of the ESSID and the BSSID as that of the connection information to be newly entered, no connection information is retrieved.

In this case, the updating unit 507 calculates the total number M of the connection records stored in the connection table 400. The updating unit 507 then judges whether the calculated total number M is at least a threshold value Mₘₐₓ. If the total number M is less than the threshold value Mₘₐₓ, the updating unit 507 enters new connection information in the connection table 400.

On the other hand, if the total number M is not less than the threshold value Mₘₐₓ, the updating unit 507 deletes the connection record having the oldest last connection time among the connection records stored in the connection table 400. The updating unit 507 then enters new connection information into the connection table 400. In the example of FIG. 31, if the total number M is at least the threshold value Mₘₐₓ, the updating unit 507 deletes the connection record 3100-1 having the oldest last connection time in the connection table 400 and enters new connection information.

In this manner, according to the second updating method, an upper limit value is set for the total number M of the connection records that can be into the connection table 400 so that the number of records in the connection table 400 can be prevented from increasing beyond the upper limit value.

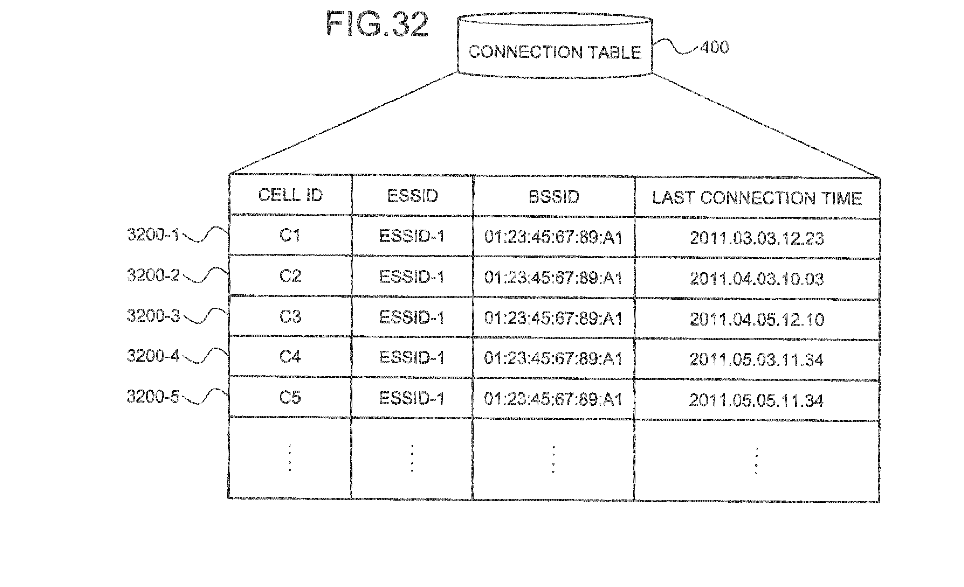

With reference to FIG. 32, a case will be described where in the connection table 400, connection information having the same combination of the ESSID and the BSSID as that of connection information to be newly entered is present.

FIG. 32 is an explanatory view (4) of an example of the contents of the connection information 400. In FIG. 32, the connection table 400 has fields for cell IDs, ESSIDs, BSSIDs, and last connection times. By entering information into the fields, connection information is stored as records (e.g., connection records 3200-1 to 3200-5).

An example of the contents of a specific process of the updating unit 507 will hereinafter be described for a case where connection information is newly entered to the connection table 400 depicted in FIG. 32 as a result of completion of connection to the access point APj. An example will be described in which connection information including the cell ID "C6", the ESSID "ESSID-1", the BSSID "01:23:45:67:89:A1" and the last connection time "2011.05.07.11.34" is newly entered.

The updating unit 507 retrieves from the connection table 400, connection information having the same combination of the ESSID and the BSSID as that of the connection information to be newly entered. In the example of FIG. 32, connection record s3200-1 to 3200-5 having the same combination of the ESSID and the BSSID as that of connection information to be newly entered are retrieved.

The updating unit 507 calculates the number N of retrieved connection records. In the example of FIG. 32, the number N of retrieved connection records is "N=5". The updating unit 507 determines whether the calculated number N is at least the threshold value Nₘₐₓ. The threshold value Nₘₐₓ represents an upper limit value of the number of the connection records that can be into the connection table 400 for the same combination of the ESSID and the BSSID. The threshold value Nₘₐₓ can be arbitrarily set. In this case, the threshold value Nₘₐₓ is "Nₘₐₓ=5".

Accordingly, in the example of FIG. 32, the number N is not less than the threshold value Nₘₐₓ. In this case, the updating unit 507 deletes from the connection table 400, the connection record 3200-1 having the oldest last connection time among the retrieved connection records 3200-1 to 3200-5. The updating unit 507 then enters new connection information into the connection table 400.

In this manner, according to the second updating method, an upper limit is set for the total number N of connection records that can be entered into the connection table 400 for the same combination of the ESSID and the BSSID so that the number of records in the connection table 400 can be prevented from increasing beyond the upper limit value.

### (First Updating Method: Update Process Procedure of Communication Apparatus 101)

An update process procedure of the communication apparatus 101 according to the second updating method will be described. The update process procedure of the communication apparatus 101 will be described in a case of completion of connection to the access point APj.

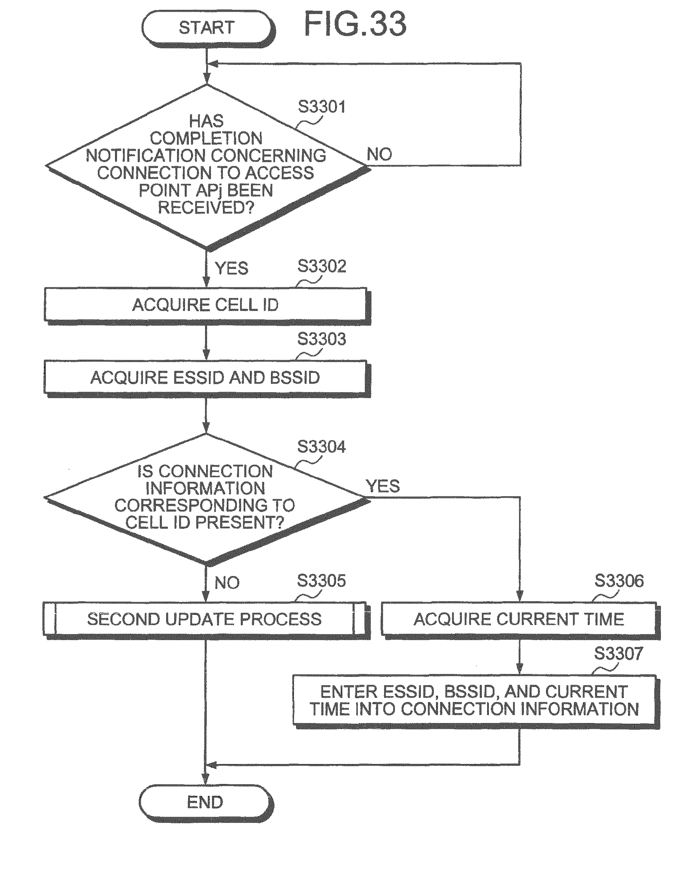

FIG. 33 is a flowchart of an example of the update process procedure of the communication apparatus 101 according to the second updating method when connection to the access point APj is completed. In the flowchart of FIG. 33, first, the updating unit 507 judges whether completion notification of connection to the access point APj has been received from the communication control unit 505 (step S3301).

The updating unit 507 waits for reception of completion notification of connection to the access point APj (step S3301: NO). Upon receiving connection completion notification (step S3301: YES), the updating unit 507 acquires from the acquiring unit 502, the cell ID of the cell Ci in which the communication apparatus is located (step S3302).

The updating unit 507 acquires from the communication control unit 505, the ESSID and the BSSID of the access point APj to which connection is completed (step S3303). The updating unit 507 refers to the connection table 400 and determines whether connection information corresponding to the acquired cell ID is present (step S3304).

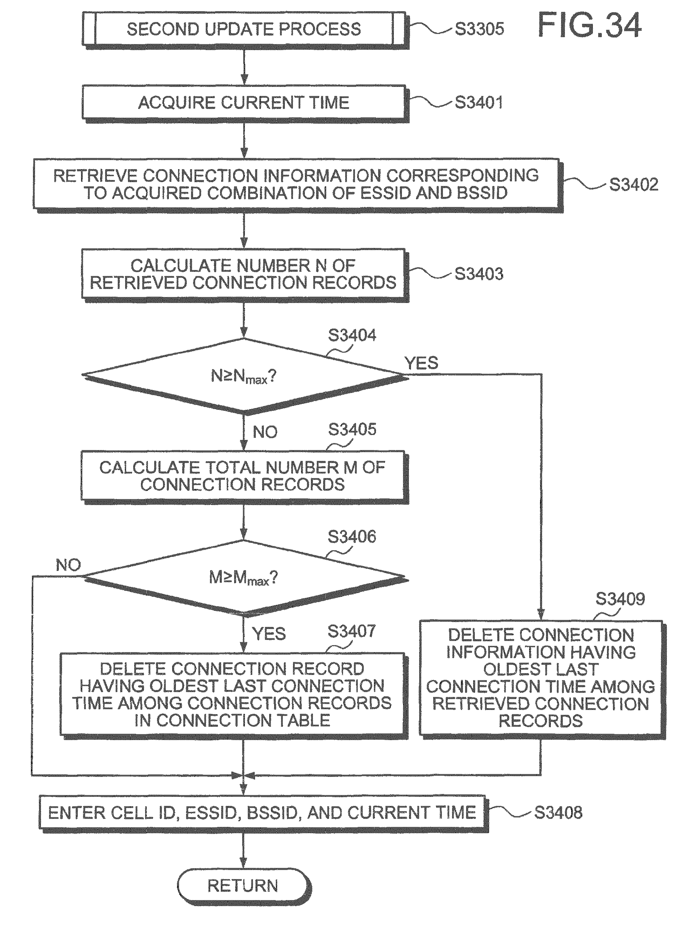

If no connection information is present (step S3304: NO), the updating unit 507 executes a second update process (step S3305), and terminates the series of processes according to this flowchart. A specific process procedure of the second update process will be described later with reference to FIG. 34.

If connection information is present at step S3304 (step S3304: YES), the updating unit 507 acquires the current time (step S3306). The updating unit 507 then enters the acquired ESSID, BSSID, and current time into the ESSID field, the BSSID field, and the last connection time field of the connection information corresponding to the acquired cell ID (step S3307), and terminates the series of processes according to this flowchart.

FIG. 34 is a flowchart of an example of the specific process procedure of the second update process. In the flowchart of FIG. 34, the updating unit 507 acquires the current time (step S3401).

The updating unit 507 retrieves from the connection table 400, connection information corresponding to the combination of the ESSID and the BSSID acquired at step S3303 depicted in FIG. 33 (step S3402). The updating unit 507 calculates the number N of retrieved connection records (step S3403).

The updating unit 507 then judges whether the calculated number N is at least the threshold value Nₘₐₓ (step S3404). If the number N is less than the threshold value Nₘₐₓ (step S3404: NO), the updating unit 507 calculates the total number M of the connection records stored in the connection table 400 (step S3405).

The updating unit 507 judges whether the calculated total number M is at least the threshold value Mₘₐₓ (step S3406). If the total number M is less than the threshold value Mₘₐₓ (step S3406: NO), the updating unit 507 transitions to step S3408. On the other hand, if the total number M is at least the threshold value Mₘₐₓ (step S3406: YES), the updating unit 507 deletes the connection record having the oldest last connection time among the connection records in the connection table 400 (step S3407).

The updating unit 507 then enters the acquired cell ID, ESSID, BSSID, and current time into the fields in the connection table 400 (step S3408), terminates the series of processes according to this flowchart, and returns to the step invoking the second update process. As a result, new connection information is entered as a record into the connection table 400.

If the number N is at least the threshold value Nₘₐₓ at step S3404 (step S3404: YES), the updating unit 507 deletes from the connection table 400, the connection record having the oldest last connection time among the retrieved connection records (step S3409), and transitions to step 3408.

An update process procedure of the communication apparatus 101 will be described in a case of detection of hand-over.

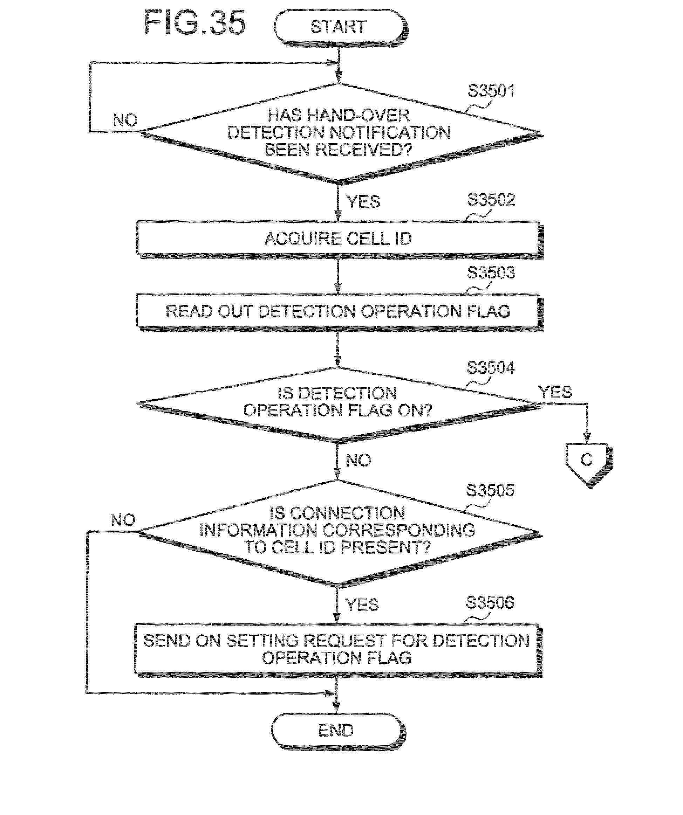

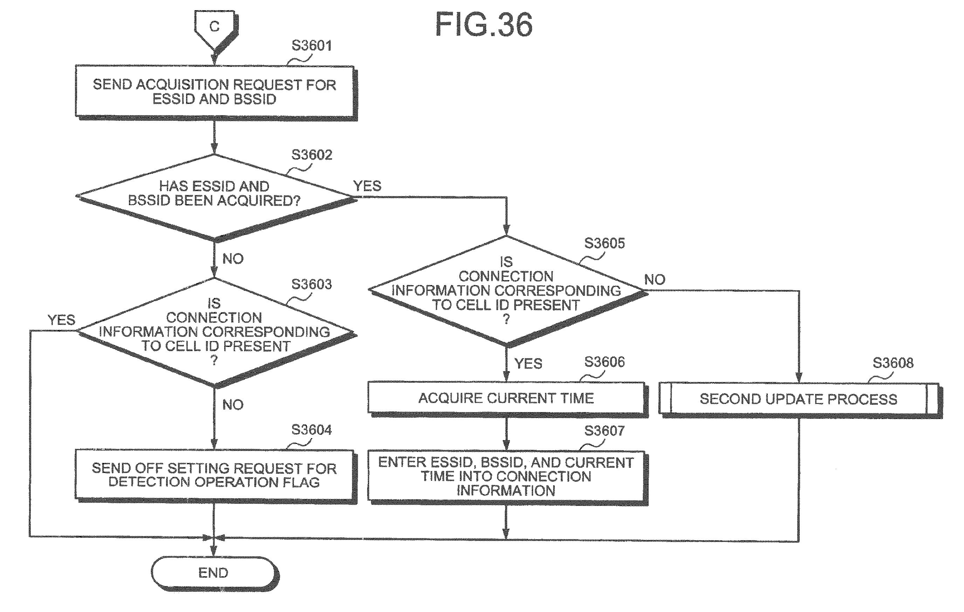

FIGs. 35 and 36 are flowcharts of an example of the update process procedure of the communication apparatus 101 according to the second updating method when hand-over is detected. In the flowchart of FIG. 35, the updating unit 507 judges whether hand-over detection notification has been received from the judging unit 1401 (step S3501).

The updating unit 507 waits for reception of hand-over detection notification (step S3501: NO). Upon receiving hand-over detection notification (step S3501: YES), the updating unit 507 acquires from the acquiring unit 502, the cell ID of the cell Ci in which the communication apparatus is located (step S3502).

The updating unit 507 reads out a detection operation flag (step S3503) and determines whether the detection operation flag is set to ON (step S3504). If the detection operation flag is set to OFF (step S3504: NO), the determining unit 504 refers to the connection table 400 and determines whether connection information corresponding to the acquired cell ID is present (step S3505).

If connection information corresponding to the cell ID is present (step S3505: YES), the determining unit 504 sends to the communication control unit 505, an ON setting request for the detection operation flag (step S3506), and terminates the series of processes according to this flowchart. On the other hand, if no connection information corresponding to the cell ID is present (step S3505: NO), the determining unit 504 ends the series of processes according to this flowchart.

If the detection operation flag is set to ON at step S3504 (step S3504: YES), the updating unit 507 transitions to step S3601 depicted in FIG. 36.

In the flowchart depicted in FIG. 36, the updating unit 507 sends to the communication control unit 505, an acquisition request for the ESSID and the BSSID of the access point APj currently connected (step S3601). The updating unit 507 judges whether the ESSID and the BSSID of the access point APj currently connected has been acquired from the communication control unit 505 (step S3602).

If the ESSID and the BSSID have not been acquired due to no-connection to the access point APj (step S3602: NO), the determining unit 504 refers to the connection table 400 and determines whether connection information corresponding to the acquired cell ID is present (step S3603).

If no connection information corresponding to the cell ID is present (step S3603: NO), the determining unit 504 sends to the communication control unit 505, an OFF setting request for the detection operation flag (step S3604), and terminates the series of processes according to this flowchart. On the other hand, if connection information corresponding to the cell ID is present (step S3603: YES), the determining unit 504 ends the series of processes according to this flowchart.

If the ESSID and the BSSID are acquired at step S3602 (step S3602: YES), the updating unit 507 refers to the connection table 400 and determines whether connection information corresponding to the acquired cell ID is present (step S3605).

If connection information is present (step S3605: YES), the updating unit 507 acquires the current time (step S3606). The updating unit 507 enters the acquired ESSID, BSSID, and the current time into the ESSID field, the BSSID field, and the last connection time field of the connection information corresponding to the acquired cell ID (step S3607), and terminates the series of processes according to this flowchart.

If no connection information is present at step S3605 (S3605: NO), the updating unit 507 executes the second update process (step S3608), and terminates the series of processes according to this flowchart. As a result, new connection information is entered as a record into the connection table 400.

The specific process procedure of the second update process executed at step S3608 is similar to the specific process procedure of the second update process depicted in FIG. 34 and therefore will not again be described.

According to the second updating method described above, an upper limit can be set for the total number N of connection records that can be entered into the connection 400 for the same combination of the ESSID and the BSSID. According to the second updating method, an upper limit value can be set for the total number M of connection records that can be entered into the connection table 400.

As described, according to the second updating method, the number of records in the connection table 400 can be prevented from increasing beyond the upper limit value, while suppressing increases in the storage area used to store the connection table 400.

The communication control methods described in the embodiments can be implemented by executing on a computer such as a personal computer or a workstation, preliminarily prepared programs. The present communication control program is stored to a computer-readable storage medium such as a hard disk, a flexible disk, a CD-ROM, an MO, and a DVD and is executed by being readout from the medium by the computer. This communication control program may be distributed via a network such as the Internet.

### EXPLANATIONS OF LETTERS OR NUMERALS

- 101: communication apparatus
- 501: detecting unit
- 502: acquiring unit
- 503: first communicating unit
- 504: determining unit
- 505: communication control unit
- 506: second communicating unit
- 507: updating unit
- 1401: judging unit

## Claims

1. A communication apparatus comprising:
a detecting unit that detects transition of a screen, from a non-display state to a display state;
a determining unit that, when the detecting unit detects the transition from the non-display state to the display state and based on information specifying among communication areas of a first base station, a communication area in which a connection operation has been performed with respect to a second base station to connect to a network via the second base station, which is detected by a detection operation different from a detection operation that detects the first base station, determines whether a connection history is present for the second base station in a communication area in which the communication apparatus is located; and
a communication control unit that, when the determining unit determines that the connection history for the second base station is present, controls a communicating unit, which communicates with the second base station, to start the detection operation for the second base station.

2. The communication apparatus according to claim 1, wherein
the detecting unit detects transition from the display state to the non-display state, and
the communication control unit suspends the detection operation for the second base station when the detecting unit detects the transition from the display state to the non-display state.

3. The communication apparatus according to claim 1 or 2, comprising:
an acquiring unit that acquires through communication with the first base station, identification information of the communication area in which the communication apparatus is located; and
a storing unit that, when the connection operation is performed with respect to the second base station in the communication area in which the communication apparatus is located, stores in a corresponding manner, connection history information indicating identification information of the communication area in which the communication apparatus is located, identification information of the second base station with respect to which the connection operation is performed in the communication area in which the communication apparatus is located, and a connection time at which the connection operation is completed with respect to the second base station, wherein
the determining unit refers to the storing unit and determines that the connection history for the second base station is present, when connection history information is present corresponding to the identification information of the communication area acquired by the acquiring unit.

4. The communication apparatus according to claim 3, comprising:
a judging unit that, if the transition from the non-display state to the display state is detected, starts execution of a judging process for judging whether the first base station to which the communication apparatus is connected is switched, wherein
the determining unit, when the judging unit judges a switching of the first base station, refers to the storing unit and determines whether the connection history is present for the second base station in the communication area in which the communication apparatus is located.

5. The communication apparatus according to claim 4, wherein
the judging unit, if the transition from the display state to the non-display state is detected, suspends the execution of the judging process for judging whether the first base station is switched.

6. The communication apparatus according to claim 5, wherein
the communication control unit suspends the detection operation for the second base station, if as a result of starting the detection operation for the second base station, the first base station to which the communication apparatus connects is switched and the determining unit determines that the connection history to the second base station is not present.

7. The communication apparatus according to claim 6, wherein
the communication control unit controls the communicating unit to resume the detection operation for the second base station, if as a result of suspending the detection operation for the second base station, the first base station to which the communication apparatus connects is switched and the determining unit determines that the connection history for the second base station is present.

8. The communication apparatus according to claim 7, comprising:
a calculating unit that, when new connection history information is entered into the storing unit, calculates a total number of records of connection history information stored in the storing unit; and
a deleting unit that, when the total number calculated by the calculating unit is not less than a threshold value, deletes from the storing unit, a record of connection history information having a connection time that is oldest among the records of connection history information stored in the storing unit.

9. The communication apparatus according to claim 8, wherein
the calculating unit, when new connection history information is entered into the storing unit, refers to the storing unit to calculate a number of entries of connection history information corresponding to identification information of the second base station indicated by the new connection history information, and
the deleting unit, when the number of entries calculated by the calculating unit is not less than a threshold value, deletes from the storing unit, an entry of connection history information having a connection time that is oldest among the entries of connection history information corresponding to the identification information of the second base station indicated by the new connection history information.

10. A communication control program causing a computer to execute a process comprising:
detecting transition of a screen, from a non-display state to a display state;
determining whether a connection history is present for a second base station in a communication area in which the computer is located, when detecting the transition from the non-display state to the display state and based on information specifying among communication areas of a first base station, a communication area in which a connection operation has been performed with respect to the second base station to connect to a network via the second base station, which is detected by a detection operation different from a detection operation that detects the first base station; and
controlling a communicating unit, which communicates with the second base station, to start the detection operation for the second base station, upon determining that the connection history for the second base station is present.

11. A communication control method executed by a computer, the communication control method comprising:
detecting transition of a screen, from a non-display state to a display state;
determining whether a connection history is present for a second base station in a communication area in which the computer is located, when detecting the transition from the non-display state to the display state and based on information specifying among communication areas of a first base station, a communication area in which a connection operation has been performed with respect to the second base station to connect to a network via the second base station, which is detected by a detection operation different from a detection operation that detects the first base station; and
controlling a communicating unit, which communicates with the second base station, to start the detection operation for the second base station, upon determining that the connection history for the second base station is present.
